# EUROPEAN PATENT SPECIFICATION

(11) **EP 4 243 098 B1**
(45) Date of publication and mention of the grant of the patent: **22.10.2025**
(21) Application number: 22160491.1
(22) Date of filing: 07.03.2022
(51) Int. Cl.: H10N 60/01, H10N 60/20, H10N 60/82, H10N 60/85

(54) **GRAPHITIC ROOM-TEMPERATURE SUPERCONDUCTOR**
GRAFITISCHER RAUMTEMPERATUR-SUPRALEITER
SUPRACONDUCTEUR GRAPHITIQUE À TEMPÉRATURE AMBIANTE

(43) Date of publication of application: 13.09.2023
(73) Proprietor: Terra Quantum AG, 9000 St. Gallen (CH)
(72) Inventor: Vinokour, Valerii, 9400 Rorschach (CH); Kopelevich, Yakov, 9400 Rorschach (CH)
(74) Representative: Lucke, Andreas

(56) References cited:
- MA RUI-SONG ET AL: "Wrinkle-induced highly conductive channels in graphene on SiO 2 /Si substrates", NANOSCALE, vol. 12, no. 22, 1 January 2020 (2020-01-01), United Kingdom, pages 12038 - 12045, XP055958334, ISSN: 2040-3364, DOI: 10.1039/D0NR01406K
- MOUN MONIKA ET AL: "Enhanced electrical transport through wrinkles in turbostratic graphene films", APPLIED PHYSICS LETTERS, AMERICAN INSTITUTE OF PHYSICS, 2 HUNTINGTON QUADRANGLE, MELVILLE, NY 11747, vol. 119, no. 3, 21 July 2021 (2021-07-21), XP012258338, ISSN: 0003-6951, [retrieved on 20210721], DOI: 10.1063/5.0056212
- MAO JINHAI ET AL: "Evidence of flat bands and correlated states in buckled graphene superlattices", NATURE, NATURE PUBLISHING GROUP UK, LONDON, vol. 584, no. 7820, 12 August 2020 (2020-08-12), pages 215 - 220, XP037218288, ISSN: 0028-0836, [retrieved on 20200812], DOI: 10.1038/S41586-020-2567-3
- GROSSE KYLE L ET AL: "Direct observation of resistive heating at graphene wrinkles and grain boundaries", APPLIED PHYSICS LETTERS, AMERICAN INSTITUTE OF PHYSICS, 2 HUNTINGTON QUADRANGLE, MELVILLE, NY 11747, vol. 105, no. 14, 6 October 2014 (2014-10-06), XP012190831, ISSN: 0003-6951, [retrieved on 19010101], DOI: 10.1063/1.4896676
- PABLO D ESQUINAZI ET AL: "Evidence for room temperature superconductivity at graphite interfaces", ARXIV.ORG, CORNELL UNIVERSITY LIBRARY, 201 OLIN LIBRARY CORNELL UNIVERSITY ITHACA, NY 14853, 1 September 2017 (2017-09-01), XP080817689, DOI: 10.1007/S40509-017-0131-0
- CALADO V E ET AL: "Formation and control of wrinkles in graphene by the wedging transfer method", APPLIED PHYSICS LETTERS, AMERICAN INSTITUTE OF PHYSICS, 2 HUNTINGTON QUADRANGLE, MELVILLE, NY 11747, vol. 101, no. 10, 3 September 2012 (2012-09-03), pages 103116 - 103116, XP012164430, ISSN: 0003-6951, [retrieved on 20120907], DOI: 10.1063/1.4751982
- ANTONOWICZ K: "Possible superconductivity at room temperature", NATURE, vol. 247, 8 February 1974 (1974-02-08), London, pages 358 - 360, XP055957868, ISSN: 0028-0836
- CHRISTIAN E PRECKER ET AL: "Identification of a possible superconducting transition above room temperature in natural graphite crystals", ARXIV.ORG, CORNELL UNIVERSITY LIBRARY, 201 OLIN LIBRARY CORNELL UNIVERSITY ITHACA, NY 14853, 30 June 2016 (2016-06-30), XP080966341, DOI: 10.1088/1367-2630/18/11/113041
- LU CAO ET AL: "Two distinct superconducting states controlled by orientation of local wrinkles in LiFeAs", ARXIV.ORG, CORNELL UNIVERSITY LIBRARY, 201 OLIN LIBRARY CORNELL UNIVERSITY ITHACA, NY 14853, 7 January 2021 (2021-01-07), XP081854200
- KEMPA H ET AL: "Absence of Metal-Insulator-Transition and Coherent Interlayer Transport in oriented graphite in parallel magnetic fields", ARXIV.ORG, CORNELL UNIVERSITY LIBRARY, 201 OLIN LIBRARY CORNELL UNIVERSITY ITHACA, NY 14853, 28 June 2002 (2002-06-28), XP080084045, DOI: 10.1016/S0038-1098(02)00711-1
- SHENGELAYA A ET AL: "Signatures of Filamentary Superconductivity up to 94 K in Tungsten Oxide WO", JOURNAL OF SUPERCONDUCTIVITY AND NOVEL MAGNETISM, SPRINGER US, BOSTON, vol. 33, no. 2, 15 November 2019 (2019-11-15), pages 301 - 306, XP037004638, ISSN: 1557-1939, [retrieved on 20191115], DOI: 10.1007/S10948-019-05329-9
- LEBEDEV S. G. ET AL: "Observation of weak superconductivity in carbon films", BULLETIN OF THE LEBEDEV PHYSICS INSTITUTE., vol. 1994, no. 12, 1 January 1994 (1994-01-01), US, pages 14 - 20, XP093270315, ISSN: 1068-3356, Retrieved from the Internet <URL:https://scholar.google.com/scholar_lookup?title=Observation%20of%20weak%20superconductivity%20in%20carbon%20films&author=S.G.%20Lebedev&publication_year=1994&pages=14-20>
- ANTONOWICZ K.: "The effect of microwaves on DC current in an Al-carbon-Al sandwich", PHYSICA STATUS SOLIDI (A). APPLIED RESEARCH, vol. 28, no. 2, 16 April 1975 (1975-04-16), DE, pages 497 - 502, XP093270255, ISSN: 0031-8965, DOI: 10.1002/pssa.2210280214
- ANTONOWICZ K. ET AL: "Additional evidence on the possibility of the existence of superconductivity at room temperature", SOVIET JOURNAL OF LOW TEMPERATURE PHYSICS, vol. 5, no. 10, 1 October 1979 (1979-10-01), New York, pages 573 - 575, XP093270256, ISSN: 0360-0335, Retrieved from the Internet <URL:https://pubs.aip.org/aip/ltp/article-pdf/5/10/573/20275907/573_1_10.0029949.pdf> DOI: 10.1063/10.0029949
- PRECKER CHRISTIAN EIKE: "Superconducting Effects in the Electrical Transport Properties of Graphite", 19 July 2021 (2021-07-19), XP093270258, Retrieved from the Internet <URL:https://ul.qucosa.de/api/qucosa%3A75673/attachment/ATT-0/>
- VOLOVIK G. E.: "Flat Band in Topological Matter : Possible Route to Room-Temperature Superconductivity", JOURNAL OF SUPERCONDUCTIVITY AND NOVEL MAGNETISM, vol. 26, no. 9, 18 May 2013 (2013-05-18), Boston, pages 2887 - 2890, XP093271642, ISSN: 1557-1939, Retrieved from the Internet <URL:http://link.springer.com/article/10.1007/s10948-013-2221-5/fulltext.html> DOI: 10.1007/s10948-013-2221-5
- ZHENG X.H. ET AL: "Room-temperature superconductivity in carbons - a mini review", PHYSICS LETTERS A., vol. 525, 1 November 2024 (2024-11-01), NL, pages 129936, XP093270257, ISSN: 0375-9601, DOI: 10.1016/j.physleta.2024.129936
- IONOV A.N., ANKUDINOV A.V, NIKOLAEVA M.N., BUGROV A.N.: "Josephson type current-voltage characteristics of chemically modified graphite at room temperature and normal pressure", PISMA V ZHURNAL TEKHNICHESKOI FIZIKI, vol. 50, no. 19, 12 October 2024 (2024-10-12), pages 13 - 16, XP093270318, Retrieved from the Internet <URL:https://www.mathnet.ru/links/fd7d8b4d9e6cc505ae30d93ecce8c196/pjtf6779.pdf> DOI: 10.61011/PJTF.2024.19.58649.19921

## Description

### TECHNICAL FIELD

The disclosure relates to a high (critical) temperature superconductor, in particular a graphite-based high (critical) temperature superconductor making use of wrinkles in the topmost layers of graphite near a surface or an interface.

### BACKGROUND

Superconductivity is a phenomenon observed in materials characterized by the zero-resistance, i.e., vanishing electrical resistance state of a material, and by expulsion of the magnetic field from the material. Materials exhibiting these properties are called superconductors. In practical experiments, superconductivity is ordinarily identified as a dissipationless (i.e., loss-free, i. e., with much lower energy losses related to current transport than in conventional, non-superconducting materials) current through the material. The phenomenon was discovered in 1911 for mercury (Hg), which becomes superconducting below its superconducting transition temperature (Tc) of 4.2K, also referred to as critical temperature. Below Tc, mercury exhibits superconductivity, above Tc it behaves like a conventional material with the conventional resistivity of mercury. In experiments, when the superconducting material is heated from a temperature below Tc to a temperature above Tc, its resistance jumps from zero to a finite (i. e., much larger) value at the superconducting transition temperature Tc. Ever since this discovery, the tireless search for materials exhibiting superconductivity at higher and elevated Tc has never stopped.

Superconductivity in materials with critical temperatures exceeding 20 K is referred to as high (critical) temperature superconductivity (HTC). The discovery of HTC in Ba-La-Cu-O cuprates with Tc ~ 30 K (see J. G. Bednorz and K. A. Müller, Z. Phys. B 64, 189 (1986)) and Y-Ba-Cu-O with Tc as high as 93 K (see M. K. Wu et al., Phys. Rev. Lett. 58, 908 (1987)) made superconductivity at ambient conditions (280 K to 310 K, 10⁵ Pa), also referred to as "Room Temperature Superconductivity" (RTS), seem possible, and triggered a race for the development of a material to show RTS. So far, the highest Tc =135 K at ambient pressure has been achieved for HgBa2Ca2Cu3O9 (see A. Schilling et al., Nature 363, 56 (1993)), and Tc was raised up to 164 K under pressure of 30 GPa (see L. Gao et al., Phys. Rev. B 50, 4260 (1994)).

Outside of cuprates, the bulk superconductivity with highest Tc = 33 K at ambient pressure has been observed in CsxRbyC60 (see K. Tanigaki, Nature 352, 222 (1991)), an alkali-doped Buckminster fullerene.

Very recently, the zero-resistance state near room temperature has been reported for various hydride systems under pressure P > 200 GPa (for a review article, see G. Gao et al, Materials Today Physics 100546 (2021), in press).

Graphite is another promising material in a race for RTS. First, bulk superconductivity was found in the alkali-metal graphite intercalation compound C8K with a superconducting transition temperature Tc = 0.15 K (see N. B. Hannay et al., Phys. Rev. Lett. 14, 225 (1965)), and 40 years later in C6Yb with Tc = 6.5 K (see T. E. Weller, et al., Nature Physics 1, 39 (2005)) and C6Ca with Tc = 11.5 K (see N. Emery et al., Phys. Rev. Lett. 95, 087003 (2005)). Observations on transport characteristics of wrinkled graphene are published in Rui-Song Ma et al., Nanoscale, vol. 12, no. 22, p. 12038-12045 (2020); Monika Moun et al., Applied Physics Letters, vol. 119, no. 3 (2021); Jinhai Mao et al., Nature, vol. 584, no. 7820, p. 215-220 (2020) and Kyle L. Grosse et al., Applied Physics Letters, vol. 105, no. 14, 143109 (2014). G. Volovik, Journal of Superconductivity and Novel Magnetism, vol. 26, p. 2887-2890 (2013) describes theoretical considerations mentioning the possibility of room temperature superconductivity in flat band topological matter and indicates that an arrangement of flat band areas close to each other may promote such occurrence.

### OVERVIEW

In view of the technical problems laid out above, there is a need for a superconductor with a superconducting transition temperature (critical temperature; Tc) of at least room temperature (280 K to 310 K), preferably at ambient pressure (0.08 to 0.12 MPa). In the context of this disclosure, the term superconductor refers to a device adapted to transport an essentially dissipationless electrical current (in other word, exhibits a zero-resistance state or a vanishing (electrical) resistance state, respectively). The essentially dissipationless electrical current may be characterized by a resistance or resistivity at least a hundred times smaller than a resistance or resistivity of a similar device (e. g., with a similar or identical material composition, in particular the same device) in a non-superconducting state (e. g. above a critical temperature and/or not exhibiting all the structural features of the claimed subject-matter).

This objective is achieved with a superconductor device according to claim 1. Claim 14 provides a use of a graphite structure as a superconductor device. Claim 15 refers to a method for fabricating a superconductor device. The dependent claims relate to preferred embodiments.

In a first aspect, a superconductor device comprises a graphite structure, a first electrode, a second electrode, and a wrinkle region. The graphite structure comprises at least one topmost atomic layer. The first electrode is arranged over the at least one topmost atomic layer. The second electrode is arranged over the at least one topmost atomic layer and spaced apart from the first electrode. The wrinkle region is comprised in the at least one topmost atomic layer. The wrinkle region is arranged between the first electrode and the second electrode and comprises a plurality of wrinkles comprising a pair of wrinkles. The first electrode and the second electrode both electrically contact both wrinkles of the pair. A distance between the wrinkles of the pair is at most 0.2 µm.

This superconductor device may exhibit a zero-resistance state at room temperature and above, and at ambient pressure. The zero-resistance state may be considered characteristic for superconductivity and, within the context of this disclosure, the defining feature of superconductivity. The zero-resistance state of the superconductor device has been demonstrated and proven in various experiments, which will be described in detail throughout this disclosure. The superconductor device may therefore implement the long sought after room-temperature superconductor. The zero-resistance state may open a plethora of application examples, for example related to quantum computing using the room-temperature superconductor or dissipationless current and information transport in otherwise conventional electronic devices such as integrated semiconductor electronics.

The zero-resistance state (and thus the superconductor/superconductivity/superconductor device according to the disclosure) may be distinguished from local (microscopic) superconductivity, which is implemented in materials that show some of the characteristics which are conventionally related to superconductivity, but not the zero-resistance state.

Results of earlier experiments may be related to local, microscopic superconductivity in small volume fractions of graphite at temperatures as high as 300 K (see, e. g., Y. Kopelevich et al., J. Low Temp. Phys. 119, 691 (2000); R. R. da Silva et al. Phys. Rev. Lett. 87, 14700 (2001); N. P. Yang et al., Chin. Phys. Lett. 18, 1648 (2001); S. Moehlecke et al., Phil. Mag. B 82, 1335 (2002); Y. Kawashima, AIP Advances 3, 052132 (2013); Y. Kopelevich et al., Physica C 514, 237 (2015)). In particular, several decades ago, Antonowicz measured Josephson-type oscillations and Shapiro-like steps in I-V characteristics at room temperature in Al-AC-Al sandwiches (AC = amorphous carbon) (cf. K. Antonowicz, Nature 247, 358 (1974); Phys. Status Solidi A 28, 497 (1975)). To go into the details of some of the other examples, magnetization measurements of both sulfur (S)-doped AC (see I. Felner et al., Phys. Rev. B 79, 233409 (2009)) and S-doped graphite (R. R. da Silva et al. Phys. Rev. Lett. 87, 14700 (2001); N. P. Yang et al., Chin. Phys. Lett. 18, 1648 (2001); S. Moehlecke et al., Phil. Mag. B 82, 1335 (2002)) have pointed towards the local superconductivity with nearly the same highest Tc of ~ 38 K. Because AC consists of curved graphene and/or fullerene-like fragments (see P. J. F. Harris et al., Phil. Mag. Lett. 80, 381 (2000)), one assumes that similar structural defects in graphite might be responsible for the high-temperature local superconductivity. So far, the efforts to achieve a zero-resistance state in graphite have failed (see e. g. A. Ballestar et al., Carbon 72, 312 (2014); P. D. Esquinazi et al., Quantum Stud.: Math. Found. 5, 41 (2018)).

The zero-resistance state of the superconductor device, also referred to as global superconductivity in the context of this disclosure, may be related to current transport along the direction of continuous, electronically coupled wrinkles in the topmost layers of the graphite. The electronic coupling may be ensured by using wrinkles with a spacing (distance) within a critical value of around 0.2 µm. To induce and pick off a superconducting current through the electronically coupled wrinkles, the (very same) wrinkles may be contacted at different positions using the electrodes. This arrangement may be considered the key to the implementation of the superconductor device.

The distance between the wrinkles of the pair may refer to a minimum distance between the wrinkles of the pair.

Alternatively, or in addition, the distance between the wrinkles of the pair may refer to an average distance between the wrinkles of the pair.

Alternatively, or in addition, the distance between the wrinkles of the pair may refer to a maximum distance between the wrinkles of the pair.

The distance between the wrinkles of the pair may be at most 0.15 µm, in particular at most 0.1 µm.

Alternatively, or in addition, each wrinkle of the plurality may comprise an average distance to its respective neighboring wrinkle. A mean wrinkle distance may be defined by a mean of the average distances of all wrinkles of the plurality. The mean wrinkle distance may be at most 0.2 µm, in particular at most 0.15 µm or at most 0.1 µm.

The wrinkles of the pair may be neighboring wrinkles. In particular, the (minimum) distance between the wrinkles of the pair may be no larger than a second wrinkle distance between any wrinkle of the pair and any other wrinkle.

The wrinkles of the pair may form a branching and/or an intersection. In particular, at least ten wrinkles of the plurality of wrinkles and respective neighboring wrinkles may form branchings and/or intersections. In particular, at least a quarter of the wrinkles of the plurality of wrinkles and respective neighboring wrinkles may form branchings and/or intersections or all wrinkles of the plurality of wrinkles and respective neighboring wrinkles may form branchings and/or intersections.

Branchings and/or intersections may beneficially enhance the electronic coupling between the wrinkles and enhance the critical temperature of the superconductor device. For an enhancement, not all wrinkles may need to branch or intersect, even branchings or intersections of a minor fraction of the wrinkles may be beneficial.

The superconductor device may be adapted to support a superconducting and/or essentially dissipationless current between the first electrode and the second electrode. In particular, the superconductor device may be adapted to support the superconducting and/or essentially dissipationless current between the first electrode and the second electrode through the wrinkle region.

The superconductor device may be adapted to support a superconducting and/or an essentially dissipationless current between the first electrode and the second electrode at a temperature of the wrinkle region of at least 100 K, in particular of at least 140 K, in particular of at least 180 K, in particular of at least 220 K, in particular of at least 260 K, in particular of at least 300 K, in particular of at least 300 K or at room temperature.

The superconducting and/or essentially dissipationless current may refer to a current between the first electrode and the second electrode, in particular through the wrinkle region, with a resistivity at least ten times lower than the bulk resistivity of graphite, in particular at least 20 times lower than the bulk resistivity of graphite, in particular at least 30 times lower than the bulk resistivity of graphite or at least 50 times lower than the bulk resistivity of graphite, in particular at least 100 times lower than the bulk resistivity of graphite, in particular at least 500 times lower than the bulk resistivity of graphite, in particular at least 1000 times lower than the bulk resistivity of graphite or at least 5000 times lower than the bulk resistivity of graphite, for example lower than 1 µΩ/meter at room temperature or lower than 0.1 µΩ/meter at room temperature.

The bulk resistivity of graphite may refer to a resistivity of pure graphite, in particular, to a resistivity of graphite comprising less than 3% (in terms of atomic number) metallic intercalates such as alkali metal intercalates.

The room temperature may refer to a temperature in a range from 280 K to 310 K.

The superconductor device may be adapted to support, with the wrinkle region at room temperature, a current between the first electrode and the second electrode through the wrinkle region with a resistivity at least a hundred times lower than the bulk resistivity of graphite.

The wrinkle region may be adapted to support at room temperature a current density between the first electrode and the second electrode through the wrinkle region of at least 10⁶ A/cm² when a voltage between the first electrode and the second electrode is at most 10 nV. In particular, the current density between the first electrode and the second electrode through the wrinkle region may be at least 10⁶ µA/cm², in particular at least 10⁷ A/cm².

The wrinkles of the pair may comprise parallel sections.

The parallel sections may correspond to sections of a minimum distance between the wrinkles of the pair.

The parallel sections may extend along at least 20% of the respective extensions of the wrinkles of the pair between the first electrode and the second electrode, in particular, along at least 40% of the respective extensions, in particular along at least 60% of the respective extensions, in particular along at least 80% of the respective extensions or along the entire respective extensions.

Parallel sections of the wrinkles may beneficially enhance their electronic coupling, and thus increase the critical temperature of the superconductor device.

The graphite structure may comprise or be composed of graphite comprising atomic layers. The atomic layers may comprise the at least one topmost atomic layer.

Each atomic layer of the plurality of atomic layers may be a layer of carbon atoms. In particular, each atomic layer of the plurality of atomic layers may correspond to a graphene layer.

A ratio between a resistivity of the graphite along a direction perpendicular to the atomic layers and the resistivity along the atomic layers may be at least 20000, in particular at least 25000, in particular at least 50000 or at least 100000. The resistivity of the graphite along the direction perpendicular to the atomic layers may refer to a temperature of the graphite of 300 K. The resistivity of the graphite along the direction perpendicular to the atomic layers and the resistivity of the graphite along the atomic layers may refer to a section of the graphite without a continuous wrinkle region or without any wrinkle region.

The graphite structure may comprise at least one bulk atomic layer below the at least one topmost atomic layer. The at least one bulk atomic layer may be comprised in the plurality of atomic layers.

In particular, the at least one bulk atomic layer may comprise at least two bulk atomic layers, in particular at least three bulk atomic layers, in particular at least four bulk atomic layers, in particular at least five bulk atomic layers, in particular at least six bulk atomic layers, in particular at least eight bulk atomic layers, in particular at least 10 bulk atomic layers, in particular at least 20 bulk atomic layers or at least 50 atomic layers.

Experiments suggest that the electronic coupling may be mediated by bulk atomic layers below the topmost atomic layers. Therefore, the bulk atomic layers may beneficially enhance the critical temperature of the superconductor device. In particular, the use of bulk atomic layers (or a bulk graphite, respectively) of a certain quality may beneficially enhance the critical temperature of the superconductor device. The ratio between the resistivity of the graphite along the direction perpendicular to the atomic layers and the resistivity along the atomic layers may be considered a straightforward characteristic of the quality of the bulk atomic layers (or the bulk graphite, respectively).

The at least one topmost atomic layer may comprise at least two atomic layers, in particular at least three atomic layers, in particular at least four atomic layers, in particular at least five atomic layers, in particular at least six atomic layers, in particular at least seven atomic layers, in particular at least eight atomic layers, in particular at least nine atomic layers, in particular at least 10 atomic layers, in particular at least 100 atomic layers or at least 1000 atomic layers.

Each bulk atomic layer may comprise a c-axis perpendicular to the bulk atomic layer.

The c-axis of all bulk atomic layers may be aligned, for example within 3°, in particular within 2°, in particular within 1°, in particular within 0.5°, in particular within 0.3° or within 0.2°.

Experiments indicate that the alignment of the c-axis of the bulk atomic layers may be considered another characteristic of the quality of the bulk atomic layers (or the bulk graphite, respectively).

The graphite may comprise or be highly oriented pyrolytic graphite.

At least a section of the graphite structure may comprise a Bernal stacking. In particular, at least a section of the at least one topmost atomic layer may comprise a Bernal stacking. In particular, at least a section of the at least one topmost atomic layer in a region between the wrinkles of the plurality of wrinkles may comprise a Bernal stacking. Alternatively, or in addition, the at least one bulk atomic layer may comprise a Bernal stacking.

At least a section of the graphite structure may comprise a rhombohedral stacking. In particular, at least a section of the at least one topmost atomic layer may comprise a rhombohedral stacking.

At least one wrinkle of the plurality of wrinkles may comprise a section with the rhombohedral stacking, and optionally a section with the Bernal stacking. In particular, a majority of the wrinkles of the plurality of wrinkles or all wrinkles may each comprise a section with the rhombohedral stacking, and optionally a section with the Bernal stacking.

A change in the stacking of the atomic layers at/in the wrinkles may be considered one of the origins of a superconductivity arising from the wrinkles, which may be at the origin of the zero-resistance state.

The at least one topmost atomic layer may comprise at least one flat section, for example between at least one pair of wrinkles of the plurality of wrinkles or between any pair of wrinkles of the plurality of wrinkles. In particular, the at least one flat section may comprise or be a or any section in the wrinkle region with a surface corrugation smaller than an average surface corrugation related to the wrinkles and/or with a curvature smaller than an average maximum curvature of the wrinkles. For example, the at least one flat section may comprise a surface corrugation of at most 3 nm, in particular at most 1 nm or at most 0.5 nm.

The term surface may refer to an interface of the graphite to vacuum, a gas (such as air), a liquid (such as an electrolyte), or to another solid.

Each layer of the at least one topmost atomic layer in the at least one flat section may comprise a c-axis perpendicular to the flat section. The c-axis of all layers of the at least one topmost atomic layer in the at least one flat section may be aligned, for example within 3°, in particular within 2°, in particular within 1° or within 0.5°.

The at least one flat section may define a surface. For example, the surface may be parallel to or defined by a plane wherein the at least one flat section extends. In embodiments, wherein the at least one flat section comprises at least three flat sections, the surface may alternatively, or in addition, be defined as a surface connecting the at least three flat sections.

Any wrinkle of the plurality of wrinkles may comprise an elongated shape.

The wrinkles of the pair(s) or the wrinkles of the plurality of wrinkles may comprise or be a curved section of the at least one topmost atomic layer. In particular, the curved section of the at least one topmost atomic layer may be curved out of the surface and/or out of the flat section.

The wrinkles of the pair(s) or the wrinkles of the plurality of wrinkles may comprise or be a fold of the at least one topmost atomic layer. In particular, the fold of the at least one topmost atomic layer may be a fold out of the surface and/or out of the flat section.

The wrinkles of the pair(s) or the wrinkles of the plurality of wrinkles may comprise or be a protrusion of the at least one topmost atomic layer from the at least one flat section. In particular, the protrusion may be a protrusion out of the surface and/or out of the flat section.

The at least one flat section may comprise a first flat section and a second flat section. Any wrinkle of the plurality of wrinkles may refer to a curved section of the at least one topmost atomic layer between the first flat section and the second flat section and/or to a fold of the at least one topmost atomic layer between the first flat section and the second flat section and/or to a protrusion of the at least one topmost atomic layer between the first flat section and the second flat section.

The wrinkles of the pair may have the distance of at most 0.2 µm along a majority of their respective lengths between the first electrode and the second electrode.

A wrinkle of the pair may comprise a straight segment or the wrinkles of the pair may comprise respective straight segments.

The straight segment(s) may extend along at least 30% of a length(s) of the wrinkle(s) between the first electrode and the second electrode, in particular along at least 50% of the length(s) of the wrinkle(s), in particular along at least 70% of the length(s) of the wrinkle(s), in particular along at least 90% of the length(s) of the wrinkle(s) or along the entire length(s) of the wrinkle(s).

The straight segment(s) may extend along a direction of the respective straight segment. The direction of the straight segment(s) may be perpendicular to the first edge and/or perpendicular to the second edge. The direction of the straight segment(s) may be parallel to the surface.

The straight segments of the wrinkles of the pair may comprise or be the parallel sections.

The distance between the wrinkles of the pair may refer to a distance between the parallel sections of the wrinkles of the pair, in particular between parallel straight segments of the wrinkles of the pair.

The wrinkles of the pair or the parallel sections of the wrinkles of the pair may have a length of at least 0.05 mm, in particular at least 0.1 mm, in particular at least 0.2 mm, in particular at least 0.3 mm or at least 0.4 mm, in particular within the wrinkle region.

The width of the wrinkle region may refer to a minimum extension of the wrinkle region along a direction perpendicular to a direction connecting the first electrode and the second electrode. Alternatively, the width of the wrinkle region may refer to an average extension of the wrinkle region along a direction perpendicular to the direction connecting the first electrode and the second electrode.

The first electrode may have a first edge defining a section of a boundary of the wrinkle region.

The second electrode may have a second edge defining a second section of the boundary of the wrinkle region. The second edge may be parallel to or concentric with the first edge.

The width of the wrinkle region may refer to an extension of the wrinkle region along a direction parallel to or concentric with the first edge or the second edge. In particular, the width of the wrinkle region may refer to a minimum extension or an average extension of the wrinkle region along a direction parallel to the first edge or the second edge.

The first electrode and/or the second electrode may be in direct physical contact with the at least one topmost atomic layer, in particular directly above the at least one topmost atomic layer. In particular, the first electrode and/or the second electrode may be in direct physical contact with the wrinkles of the pair.

The second electrode may be displaced with respect to the first electrode along the at least one topmost atomic layer. The second electrode may be at a same height or at a different height as the first electrode along a vertical direction perpendicular to the at least one topmost atomic layer and/or to the surface.

A wrinkle of the pair or both wrinkles of the pair may extend along a first wrinkle direction in a vicinity of the first electrode and/or at its (their) respective contact(s) to the first electrode.

In particular, the wrinkle(s) may be essentially straight along the first wrinkle direction in the vicinity of the first electrode. The geometry wherein the wrinkles encounter the edge of the electrode(s) at a 90° angle (perpendicularly) may be beneficial for driving a superconducting/dissipationless current through the superconductor device as well as for picking off the superconducting/dissipationless current.

The first edge may be perpendicular to the first wrinkle direction. The first electrode may contact a wrinkle with an angle of essentially 90° between the first edge and the first wrinkle direction, in particular contact at least 20% of the wrinkles of the plurality of wrinkles, in particular at least 30% of the wrinkles, in particular at least 40% of the wrinkles or at least 50% of the wrinkles with the angle of essentially 90° between the first edge and the first wrinkle direction.

A wrinkle of the pair or both wrinkles of the pair may extend along a second wrinkle direction in a vicinity of the second electrode and/or at its (their) respective contact(s) to the second electrode(s). In particular, the wrinkle may be essentially straight along the second wrinkle direction in the vicinity of the first electrode.

The wrinkles of the pair may extend along the second wrinkle direction in the vicinity of the second electrode.

The second edge may be perpendicular to the second wrinkle direction.

A length of the wrinkle region between the first electrode and the second electrode may be at least 0.5 µm, in particular at least 1 µm, in particular at least 0.01 mm, in particular at least 0.05 mm, in particular at least 0.1 mm, in particular at least 0.2 mm, in particular at least 1 mm, in particular at least 10 mm, in particular at least 100 mm or at least 200 mm.

A width of the wrinkle region may be at least 1 µm, in particular at least 2 µm or at least 50 µm.

The plurality of wrinkles may comprise at least 3 wrinkles, in particular at least 4 wrinkles, in particular at least 5 wrinkles, in particular at least 10 wrinkles, in particular at least 100 wrinkles or at least 1000 wrinkles.

The plurality of wrinkles may comprise a dense wrinkle array with at least one wrinkle.

The plurality of wrinkles may comprise a neighboring wrinkle and an opposite neighboring wrinkle of the at least one wrinkle of the dense wrinkle array on its opposite sides, wherein a distance between the at least one wrinkle and the neighboring wrinkle and a distance between the at least one wrinkle and the opposite neighboring wrinkle may both be at most 0.2 µm.

The dense wrinkle array may maximize the electronic coupling, thus enhancing the critical temperature of the superconductor device, as every densely-packed wrinkle may be coupled to at least two neighboring wrinkles on its opposite sides. In particular, the dense wrinkle array (densely-packed wrinkles) is free of major sections of the wrinkle region without wrinkles, which may not contribute to the dissipationless current.

The at least one wrinkle, the neighboring wrinkle and/or the opposite neighboring wrinkle may be characterized by features disclosed above in the context of the wrinkle.

The distance between the at least one wrinkle and the (opposite) neighboring wrinkle may be characterized by features disclosed above in the context of the distance between the wrinkles of the pair.

The dense wrinkle array may comprise at least two wrinkles, in particular at least three wrinkles, in particular at least four wrinkles, in particular at least five wrinkles, in particular at least six wrinkles, in particular at least seven wrinkles or at least eight wrinkles characterized by the features described above in the context of the at least one wrinkle.

The neighboring wrinkle or the opposite neighboring wrinkle may be a wrinkle of the dense wrinkle array.

The dense wrinkle array may be continuous and/or not comprise any flat section with a width exceeding 0.2 µm.

A minimum distance between any wrinkle of the dense wrinkle array and any nearest-neighbor wrinkle of the dense wrinkle array may not exceed 0.2 µm (for both (reference) sides of the wrinkle). The nearest-neighbor wrinkle may be a wrinkle of the dense wrinkle array on a reference side of the wrinkle with a minimum distance to the wrinkle smaller than a minimum distance between the wrinkle and any other wrinkle of the dense wrinkle array on the reference side of the wrinkle.

The at least one topmost atomic layer and/or the plurality of wrinkles may comprise at least two dense wrinkle arrays, in particular at least three dense wrinkle arrays, in particular at least five dense wrinkle arrays, in particular at least 10 dense wrinkle arrays or at least 100 dense wrinkle arrays.

At least a section of the wrinkles of the pair and/or of the wrinkles of the dense wrinkle array(s) or of the wrinkles of the plurality may be oriented along a common wrinkle direction. Having the wrinkles (at least partially) oriented along the same, common wrinkle direction may further improve the parallelism of the wrinkles and thus the electronic coupling between the wrinkles and ultimately the critical temperature of the superconductor device.

In particular, the wrinkles of the pair and/or the wrinkles of the dense wrinkle array(s) or the wrinkles of the plurality may be oriented along the common wrinkle direction along the majority of their respective extensions between the first electrode and the second electrode. In particular, the wrinkles of the pair and/or the wrinkles of the dense wrinkle array or the wrinkles of the plurality may be oriented along the common wrinkle direction along their respective entire extensions between the first electrode and the second electrode.

The common wrinkle direction may be parallel to or coincide with a line connecting the first electrode and the second electrode.

The common wrinkle direction may be perpendicular to a direction of the width of the wrinkle region and/or to the first edge and/or to the second edge.

The at least section of the wrinkle(s) oriented along the common wrinkle direction may be a straight segment of the wrinkle(s), in particular with one or all the features disclosed above in the context of the straight segment.

The wrinkles of the pair and/or the wrinkles of the dense wrinkle array(s) may extend through all atomic layers of the at least one topmost atomic layer. The at least one topmost atomic layer may comprise at least three topmost atomic layers.

The graphite structure may further comprise at least two bulk atomic layers below the at least one topmost atomic layer with a bulk layer spacing between neighboring bulk atomic layers; and a wrinkle layer spacing between an atomic layer of the at least one topmost atomic layer and a neighboring layer of the at least one topmost atomic layer in a wrinkle. The wrinkle layer spacing may exceed the bulk layer spacing, in particular by at least 0.5%, in particular by at least 1% or at least 1.5%.

A change in the layer spacing of the atomic layers at/in the wrinkles may be considered one of the origins of a superconductivity arising from the wrinkles, which may be at the origin of the zero-resistance state.

The bulk layer spacing may refer to an average of spacings between neighboring bulk atomic layers of the at least two bulk atomic layers.

For example, the bulk layer spacing may be 0.335 nm.

The wrinkle layer spacing may be at least 0.336 nm, in particular at least 0.337 nm or 0.34 nm. Alternatively, or in addition, the wrinkle layer spacing may be at most 0.344 nm.

The at least two bulk atomic layers may be essentially flat.

In particular, the at least two bulk atomic layers may comprise a corrugation significantly smaller than a corrugation of the at least one topmost atomic layer.

A downward vertical extension of the wrinkles of the pair or of a majority of wrinkles of the dense wrinkle array(s) or of a majority of wrinkles of the plurality of wrinkles, may end within the at least one topmost atomic layer.

The majority of wrinkles may refer to at least half of the wrinkles of the plurality of wrinkles.

A ratio between a height and a width of the wrinkles of the pair and/or of the wrinkles of the dense wrinkle array may be at least 0.5, in particular at least 0.7, in particular at least 0.9, in particular at least 1.1 or at least 1.3.

The higher the ratio between the height and the width of the wrinkle, the higher may be its contribution to the dissipationless current and/or the superconductivity.

A height of the wrinkles of the pair and/or of the wrinkle(s) of the dense wrinkle array may be at most 10 nm, in particular at most 8 nm, in particular at most 6 nm, or at most 2 nm or at most 1 nm.

An average height of the wrinkles of the pair and/or of the wrinkles of the dense wrinkle array may be at most 10 nm, in particular at most 8 nm, in particular at most 6 nm, or at most 2 nm or at most 1 nm.

A height of the wrinkles of the pair and/or of the wrinkles of the dense wrinkle array may be at least 0.7 nm, in particular at least 1 nm, in particular at least 2 nm or at least 3 nm.

An average height of the wrinkles of the pair and/or of the wrinkles of the dense wrinkle array may be at least 1 nm, in particular at least 2 nm or at least 3 nm.

A width of the wrinkles of the pair and/or of the wrinkles of the dense wrinkle array may be at least 0.5 nm, in particular at least 1 nm or at least 1.5 nm.

An average width of the wrinkles of the pair and/or of the wrinkles of the dense wrinkle array may be at least 0.5 nm, in particular at least 1 nm or at least 1.5 nm.

A width of the wrinkles of the pair and/or of the wrinkles of the dense wrinkle array may be at most 8 nm, in particular at most 6 nm or at most 5 nm.

An average width of the wrinkles of the pair and/or of the wrinkles of the dense wrinkle array may be at most 8 nm, in particular at most 6 nm or at most 5 nm.

The plurality of wrinkles may comprise at least two pairs of wrinkles, in particular at least three pairs of wrinkles, in particular at least four pairs of wrinkles, in particular at least five pairs of wrinkles, in particular at least six pairs of wrinkles, in particular at least seven pairs of wrinkles, in particular at least eight pairs of wrinkles, in particular at least nine pairs of wrinkles, in particular at least 10 pairs of wrinkles, in particular at least twenty pairs of wrinkles or at least forty pairs of wrinkles. The first electrode and the second electrode may both electrically contact both respective wrinkles of the pairs. Respective distances between the respective wrinkles of the pairs may be at most 0.2 µm.

The pairs of wrinkles may be characterized by one or all the features described above in the context of the pair of wrinkles.

The respective distances may be characterized by one or all the features described above in the context of the distance between the wrinkles of the pair.

A fraction of the wrinkles of the pairs may comprise respective straight segments.

Each straight segment may extend along a direction of the respective straight segment. For a fraction of the pairs or for a fraction of the wrinkles of the pair(s) and/or of the dense wrinkle array(s) the directions of the straight segments may be parallel to each other.

For a fraction of the pairs, the wrinkles of the pair may comprise parallel sections.

For a fraction of the pairs, the wrinkles of the pair may form a branching or an intersection.

A fraction of the wrinkles of the pair(s) and/or of the dense wrinkle array(s) may extend along the first wrinkle direction in the vicinity of the first electrode and/or at their respective contacts to the first electrode.

A fraction of the wrinkles of the pair(s) and/or of the dense wrinkle array(s) may extend along the second wrinkle direction in the vicinity of the second electrode and/or at their respective contacts to the second electrode.

The fraction may refer to at least 10%, in particular to at least 20%, in particular to at least 30%, in particular to at least 40%, in particular to at least 50%, in particular to at least 60% or to at least 80%.

Each wrinkle of the pair(s) and/or of the dense wrinkle array(s) may have a cross section, in particular in a plane perpendicular to a direction of the wrinkle and/or to a direction of a straight segment of the wrinkle and/or to the at least one topmost atomic layer and/or to the surface.

The plurality of wrinkles may have a total cross section defined by the sum of the cross sections of all wrinkles of the pair(s) and/or of the dense wrinkle array(s).

The wrinkle region may be adapted to support a current density between the first electrode and the second electrode per total cross section of at least 10⁴ µA/cm² when a voltage between the first electrode and the second electrode is at most 10 nV and a temperature of the wrinkle region is 295 K. In particular, the current density between the first electrode and the second electrode per total cross section may be at least 10⁵ A/cm², in particular at least 10⁷ A/cm² or 10⁹ A/cm².

The at least one topmost atomic layer may further comprise a second wrinkle region, wherein the second wrinkle region is arranged or defined between two electrodes of the superconductor device associated with the respective wrinkle region. The second wrinkle region may comprise a second plurality of wrinkles with a second pair of wrinkles. The two electrodes may both electrically contact both wrinkles of the second pair of wrinkles. A distance between the wrinkles of the second pair may be at most 0.2 µm.

The second wrinkle region may be characterized by one or all the features described in the context of the wrinkle region.

The second plurality of wrinkles may be characterized by one or all the features described in the context of the plurality of wrinkles.

The second pair of wrinkles may be characterized by one or all the features described in the context of the pair of wrinkles.

The at least one topmost atomic layer may comprise a plurality of wrinkle regions comprising the wrinkle region and the second wrinkle region, wherein each wrinkle region of the plurality of wrinkle regions may be characterized by one or all the features described above in the context of the second wrinkle region.

The two electrodes associated with the respective wrinkle region may be the first electrode and the second electrode.

Alternatively, or in addition, the superconductor device may comprise a third electrode arranged over the at least one topmost atomic layer and spaced apart from the first electrode and the second electrode. The two electrodes associated with the second wrinkle region may be the second electrode and the third electrode.

The superconductor device may comprise a plurality of electrodes arranged over the at least one topmost atomic layer. Any electrode of the plurality of electrodes may be spaced apart from the other electrodes of the plurality of electrodes. The plurality of electrodes may comprise the first electrode, the second electrode and/or the third electrode.

The plurality of electrodes may comprise at least four electrodes, in particular at least five electrodes, in particular at least six electrodes, in particular at least seven electrodes, in particular at least nine electrodes, in particular at least 10 electrodes, in particular at least 50 electrodes or at least 100 electrodes.

Using multiple electrodes, the superconductor device may be extended to span an extended region along one or two dimensions.

The superconductor device may be adapted to support a dissipationless and/or superconducting current between two electrodes of the plurality of electrodes, in particular between any two electrodes of the plurality of electrodes or between any pair of neighboring electrodes of the plurality of electrodes. For example, the superconductor device may be adapted to support the dissipationless and/or superconducting current between the two electrodes with the wrinkle region associated with the two electrodes at room temperature.

Each wrinkle region of the plurality of wrinkle regions may be associated with a pair of electrodes of the plurality of electrodes, in particular with a pair of neighboring electrodes.

The electrodes of the plurality of electrodes may be interconnected by a wrinkle region, in particular neighboring electrodes of the plurality of electrodes may be interconnected by at least two wrinkle regions.

Any pair of neighboring electrodes of the plurality of electrodes may be interconnected by a wrinkle region, in particular by at least two wrinkle regions.

The electrodes of the plurality of electrodes may be arranged essentially in parallel to each other.

Each electrode may comprise at least one edge defining a section of a boundary of a wrinkle region, in particular at least two edges defining boundaries of wrinkle regions.

The at least one edges (at least two edges) of at least two electrodes of the plurality of electrodes may be essentially parallel to each other.

In particular the at least one edges (at least two edges) of at least half of the electrodes of the plurality of electrodes may be essentially parallel to each other, or the at least one edges (at least two edges) of all the electrodes of the plurality of electrodes may be essentially parallel to each other.

Opposite edges of a pair of neighboring electrodes may be parallel to each other, in particular, respective opposite edges of at least two pairs (or at least three pairs, or at least four pairs) of neighboring electrodes.

The superconductor device may further comprise a third electrode arranged over the at least one topmost atomic layer and spaced apart from the first electrode and the second electrode. The at least one topmost atomic layer may comprise a second wrinkle region defined between the second electrode and the third electrode. The second wrinkle region may comprise a second plurality of wrinkles. The second electrode and the third electrode may electrically contact each wrinkle of the second plurality of wrinkles. For the each wrinkle of the second plurality of wrinkles, a distance between the each wrinkle and a neighboring wrinkle may be at most 0.2 µm.

The superconductor device may further comprise a plurality of electrodes comprising the first electrode and the second electrode, wherein the plurality of electrodes comprises at least four electrodes spaced apart from each other. The superconductor device may further comprise a plurality of wrinkle regions of the at least one topmost atomic layer, comprising the wrinkle region, wherein the plurality of wrinkle regions comprises at least three wrinkle regions. The wrinkle regions of the plurality of wrinkle regions may be associated with respective pairs of electrodes of the plurality of electrodes; may be arranged between the electrodes of the respective associated pair; and may comprises respective pluralities of wrinkles comprising a respective pair of wrinkles. The electrodes of the respective associated pair may both electrically contact both wrinkles of the respective pair. A distance between the wrinkles of the respective pair may be at most 0.2 µm. Any two electrodes of the plurality of electrodes may be electrically interconnected via the wrinkle regions and/or the electrodes. In such embodiments, the plurality of electrodes may comprise at least five electrodes, in particular at least six electrodes, in particular at least eight electrodes, in particular at least ten electrodes, in particular at least 20 electrodes, in particular at least 50 electrodes or at least 100 electrodes. Alternatively, or in addition, in such embodiments, the plurality of wrinkle regions may comprise at least five wrinkle regions, in particular at least six wrinkle regions, in particular at least eight wrinkle regions, in particular at least ten wrinkle regions, in particular at least 20 wrinkle regions, in particular at least 50 wrinkle regions or at least 100 wrinkle regions.

The superconductor device may further be adapted to provide a current between the first electrode and the second electrode per total cross section of the wrinkles of at least 10⁶ A/cm² when an external field of 9 T is applied to the wrinkle region.

The superconductor device may be adapted to provide a current between the first electrode and the second electrode per total cross section of the wrinkles of at least 10⁷ A/cm² or at least 10⁸ A/cm² when an external field of 9 T is applied to the wrinkle region.

A second aspect refers to a use of a wrinkle region of at least one topmost atomic layer of a graphite structure for a superconductor device, wherein the wrinkle region comprises a plurality of wrinkles comprising a pair of wrinkles; and wherein a distance between the wrinkles of the pair is at most 0.2 µm.

The superconductor device may be characterized by one or all the features described above.

The superconductor device may be a device wherein a superconducting and/or essentially dissipationless current flows through the wrinkle region and wherein a temperature of the wrinkle region is in a range from 280 K to 310 K.

The use may further comprise driving a superconducting and/or essentially dissipationless current through the wrinkle region, in particular wherein a current density of the wrinkle region is at least 10⁹ A/cm² at a temperature of the wrinkle region not exceeding 4.5 K, and in particular is at least 10⁸ A/cm² at a temperature of the wrinkle region of 300 K.

The superconductor device may comprise a crossover magnetic field. The crossover magnetic field may correspond to a magnetic field at the wrinkle region, in particular perpendicular to the at least one topmost atomic layer and/or to a surface defined by the at least one flat section of the at least one topmost atomic layer, for which a resistivity of the wrinkle region or of the room-temperature superconductor device is independent of the temperature of the wrinkle region.

For example, the crossover field may be 0.01 T, or 0.02 T, or 0.03 T or 0.035 T.

The use may further comprise applying a magnetic field at the wrinkle region, in particular a magnetic field perpendicular to the at least one topmost atomic layer and/or to a surface defined by at least one flat section of the at least one topmost atomic layer.

The applied magnetic field may exceed the crossover field.

The method may further comprise, during the applying the magnetic field at the wrinkle region, applying a temperature exceeding a reference temperature to the wrinkle region to increase a critical current of the wrinkle region as compared to a critical current of the wrinkle region at the reference temperature. The reference temperature may be in a range from 4.5 K to 100 K.

The superconductor device may further comprise a third electrode and a fourth electrode, and the use may comprise driving the current through the wrinkle region through the third electrode and the fourth electrode.

The superconductor device, the graphite structure, the at least one topmost atomic layer of the graphite, the plurality of wrinkles, the first electrode, the second electrode, the third electrode, the fourth electrode, the surface, and the current may be characterized by one or all the features described above.

In a third aspect, a method for fabricating a superconductor device comprises providing a wrinkle region of at least one topmost atomic layer of a graphite structure, wherein the wrinkle region comprises a plurality of wrinkles with a pair of wrinkles, and wherein a distance between the wrinkles of the pair is at most 0.2 µm. The method further comprises arranging a first electrode over the at least one topmost atomic layer and in electric contact with the wrinkles of the pair, and arranging a second electrode over the at least one topmost atomic layer and in electric contact with the wrinkles of the pair, such that the second electrode is displaced from the first electrode along the at least one topmost atomic layer and that the wrinkle region is located between the first electrode and the second electrode.

The wrinkle region may be adapted to support a current between the first electrode and the second electrode per width of the wrinkle region of at least 5 µA/mm when a voltage between the first electrode and the second electrode is at most 10 nV and when the wrinkle region is at room temperature.

Providing the wrinkle region may further comprise providing a graphite basic material and cleaving the graphite basic material.

The cleaving the graphite basic material may comprise mechanically exfoliating a portion of the graphite basic material. In particular, cleaving the graphite basic material may comprise attaching a cleaving element to the graphite basic material and mechanically removing the cleaving element and a portion of the graphite basic material. Attaching the cleaving element to the graphite basic material may comprise applying an adhesive to the graphite basic material. The adhesive may be adapted to mechanically couple the cleaving element to the graphite starter material in the attaching the cleaving element.

The cleaving the graphite basic material may comprise cleaving the graphite basic material essentially between a first atomic layer of the graphite basic material and a second atomic layer of the graphite basic material.

The cleaving the graphite basic material may comprise removing at least one, in particular at least 10 or at least 100, atomic layers from the graphite basic material.

The cleaving the graphite basic material may comprise generating a surface of the graphite structure corresponding to an atomic layer of the graphite. Alternatively, or in addition, the surface may be defined by the at least one topmost atomic layer.

The cleaving the graphite basic material may comprise generating an as-cleaved wrinkle region with a plurality of as-cleaved wrinkles, in particular of parallel as-cleaved wrinkles.

The method may further comprise selecting the wrinkle region from the as-cleaved wrinkle region. For example, the method may comprise selecting the wrinkles of the wrinkle region from the as-cleaved wrinkles of the as-cleaved wrinkle region.

The method may further comprise arranging the first electrode and arranging the second electrode according to the wrinkle region according to the selecting the wrinkle region from the as-cleaved wrinkle region. For example, the method may comprise arranging the first electrode and arranging the second electrode to generate the wrinkles of the wrinkle region in electrical contact with the first electrode and the second electrode by contacting the as-cleaved wrinkles of the as-cleaved wrinkle region with the first electrode and the second electrode.

The arranging the first electrode over the at least one topmost atomic layer and/or the arranging the second electrode over the at least one topmost atomic layer may comprise a masking of the at least one topmost atomic layer.

The arranging the first electrode over the at least one topmost atomic layer and/or the arranging the second electrode over the at least one topmost atomic layer may comprise depositing a conductive material over the at least one topmost atomic layer, in particular after the masking. The conductive material may comprise a noble metal such as gold, silver, or copper.

The method may further comprise arranging a third electrode over the at least one topmost atomic layer.

The method may further comprise defining a second wrinkle region of the topmost atomic layer using two electrodes.

The superconductor device may be characterized by one or all the features described above.

### BRIEF DESCRIPTION OF THE FIGURES

The techniques of the present disclosure and the advantages associated therewith will be best apparent from a description of exemplary embodiments in accordance with the accompanying drawings, in which:
- Fig. 1: shows a superconductor device according to an embodiment;
- Fig. 2: shows a wrinkle for a superconductor device;
- Fig. 3a: shows a superconductor device according to another embodiment;
- Fig. 3b: shows a superconductor device according to another embodiment;
- Fig. 3c: shows a superconductor device according to another embodiment;
- Fig. 3d: shows a superconductor device according to another embodiment;
- Fig. 3e: shows a superconductor device according to another embodiment;
- Fig. 4a: shows a superconductor device according to another embodiment;
- Fig. 4b: shows a superconductor device according to another embodiment;
- Fig. 5a: shows current-voltage characteristics of a superconductor device;
- Fig. 5b: shows another current-voltage characteristic of a superconductor device;
- Fig. 6a: shows a magnetization curve of a superconductor device;
- Fig. 6b: shows a magnetization curve of a conventional superconductor for reference;
- Fig. 6c: shows a temperature dependence of the critical current of a superconductor device;
- Fig. 7: shows a magnetic field dependence of the critical current of a superconductor device;
- Fig. 8a: shows a method for cleaving a graphite basic material;
- Fig. 8b: shows topmost layers of graphite after the cleaving;
- Fig. 9a: is a schematic illustration of wrinkle formation during the cleaving;
- Fig. 9b: is another schematic illustration of the wrinkle formation during the cleaving;
- Fig. 9c: is another schematic illustration of the wrinkle formation during the cleaving;
- Fig. 10a: is a schematic illustration of a process step to provide a wrinkle region;
- Fig. 10b: is a schematic illustration of another process step to provide a wrinkle region; and
- Fig. 10c: is a schematic illustration of another process step to provide a wrinkle region.

### DETAILED DESCRIPTION OF EMBODIMENTS

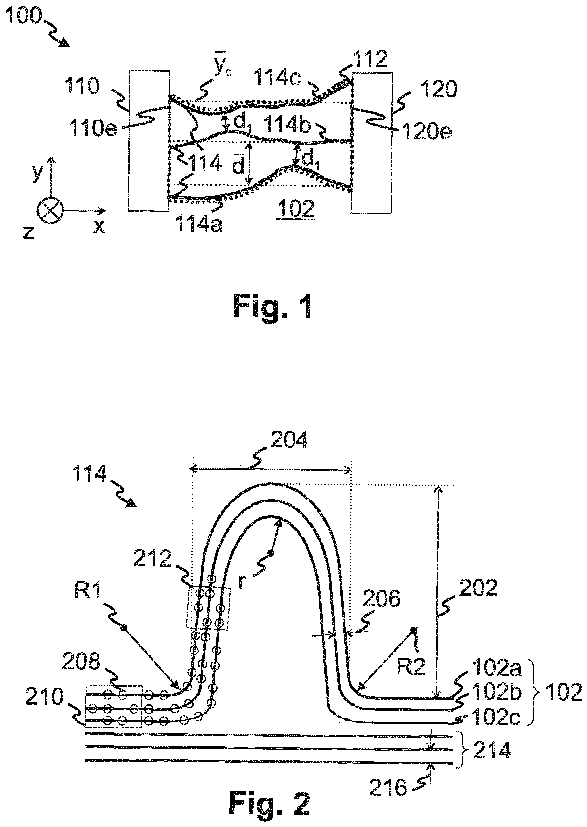

Fig. 1 is a schematic illustration of a superconductor device according to a first embodiment. The device comprises a graphite structure 100, more specifically its topmost layers 102 along the vertical direction z (pointing into the plane of the figure).

The topmost layers 102 comprise wrinkles 114, which are line defects with respect to the (regular) planar arrangement of the carbon atoms in the topmost layers 102. More specifically, the carbon atoms of the wrinkles 114 are displaced out of a plane x, y corresponding to flat sections of the topmost layers 102 with the (regular) planar arrangement of the carbon atoms therein. In other words, the wrinkles 114 protrude along the (negative) vertical direction (-)z from the plane x, y defined by the flat sections of the topmost layers 102.

The wrinkles 114a, 114b, 114c are sufficiently close to each other to allow for an electronic coupling between them, which is beneficial for establishing room-temperature superconductivity. In other words, a spacing, or distance, respectively, between the wrinkles 114 is no larger than a critical value for a sufficient electronic coupling. Our experiments indicate that this critical value is in the range from 2 to 200 nm, and presumably in the range from 2 to 100 nm.

Various approaches may be applied to characterize the distance between the wrinkles 114a, 114b, 114c.

One relevant approach is to use the smallest distance d1 between a pair 114a, 114b; 114b, 114c of wrinkles. The sections of the wrinkles 114a, 114b, 114c defining the minimum distance contribute significantly to the electronic coupling and therefore to the superconductivity.

Another relevant approach uses the average distance *d̅* between each pair 114a, 114b of neighboring wrinkles. This approach gives a measure of the overall/average electronic coupling between the wrinkles 114a, 114b along their respective lengths between the electrodes 110, 120. According to the example depicted in Fig. 1, the wrinkles 114a, 114b, 114c each extend essentially along a direction x parallel to a surface or an interface of the graphite structure 100 defined by the topmost layer 102. They are spaced apart essentially along the direction y. To determine the average, the average position *y̅_̅{̅c̅}̅* of each wrinkle along the direction y is first determined, and then the average distance *d̅* is measured between the average positions *y̅_̅{̅c̅}̅*.

The plurality 114 of wrinkles 114a, 114b, 114c are located within a (wrinkle) region 112 of the topmost layers 102. The outermost wrinkles 114a, 114c of the plurality 114 form boundaries of the wrinkle region 112.

Electrodes 110, 120 are arranged on the topmost layers 102 and contact the wrinkles 114 electrically at different positions corresponding to the edges 110e, 120e of the electrodes.

The electrodes 110, 120 or their respective edges 110e, 120e contacting the wrinkles 114 may be considered to form boundaries of the wrinkle region 112.

As will be laid out in more detail throughout the disclosure, this structure implements a high-temperature superconductor with a critical temperature exceeding room temperature, even at ambient pressure, or a room-temperature superconductor, respectively.

Figure 2 gives the detailed view to schematically illustrate a possible structure of a wrinkle 114. The figure may be considered a cross section through one of the wrinkles 114a, 114b, 114c of the wrinkle region 112 of figure 1 parallel to the y, z plane.

Graphite has a layered structure of (carbon) atoms, wherein layers characterized by atomic distances of < 0.2 nm therein are separated from each other by a layer spacing 206, 216 > 0.3 nm.

According to the embodiment of figure 2, the wrinkle 114 extends through three topmost atomic layers 102a, 102b, 102c of the graphite. In alternative embodiments, the wrinkle 114 may extend through two, four, five, six, or more topmost atomic layers 114.

Bulk atomic layers 214 below the topmost atomic layers 114 are essentially flat and not modified by the wrinkle 114. According to the example, three bulk atomic layers 214 are shown, but many more bulk atomic layers 214 may be present, such as 10, 10², 10³, 10⁴, 10⁵, 10⁶, 10⁷ or more.

The wrinkle 114 bends out of the surface with radii R1, R2 in the nanometer range, for example in a range from 1 to 100 nm. Correspondingly, the bending radius r at the upper end of the wrinkle 114 lies in a similar range.

Consequently, the height 202 and the width 204 which may be used for an alternative characterization (as compared to the radii R1, R2, r) are also in the nanometer range.

The radii R1, R2, r (or height 202 and width 204, respectively) in the nanometer range result in a change of the atomic arrangement at and/or in the wrinkle 114 as compared to the regular arrangement of (carbon) atoms in graphite, for example in the flat sections of the topmost atomic layers 102 or in the bulk atomic layers 214.

For example, the interlayer spacing 206 in and/or at the wrinkle 114 amounts to 0.336 to 0.344 nm and is larger than the atomic layer spacing 216 of the bulk atomic layers 214 (0.335 nm).

Moreover, the stacking sequence of the (topmost) atomic layers 102a, 102b, 102c changes at and/or in the wrinkle 114. This is illustrated in figure 2 by depicting the atoms 208 in the section 210 outside the wrinkle 114 as well as in the section 212 of the wrinkle 114.

According to the example of figure 2, in the section 210 outside the wrinkle 114, the atoms of the first topmost atomic layer 102a and of the third topmost atomic layer 102c are arranged directly (along the plane x, y) on top of each other. This type of stacking is referred to as Bernal.

In contrast, in the section 212 of the wrinkle 114 the atoms of the first topmost atomic layer 102a, of the second topmost atomic layer 102b, and of the third topmost atomic layer 102c are each displaced with respect to each other. This type of stacking is different from the one in the section 210 outside of the wrinkle as an effect of the bending radius R1. The change in the stacking influences the electronic structure and may give rise to the superconductivity.

According to the stacking depicted in the section 212 of the example of figure 2, the atoms of a fourth topmost atomic layer (if present with wrinkles under the third topmost atomic layer 102c) may be arranged directly (along the plane x, y) under the atoms of the first topmost atomic layer 102a. Such an arrangement is referred to as rhombohedral, and commonly realized in graphite.

A change of the atomic arrangement at and/or in the wrinkle 114 as compared to the regular arrangement of (carbon) atoms in graphite may result in a local modification of the electronic structure of the graphite, and a local superconductivity. The extended geometry of the wrinkle 114 and the coupling of the wrinkles in the wrinkle region 112 perpendicular to the wrinkles 114 as illustrated in Fig. 1 converts and transfers this local superconductivity into a superconductivity characterized by a zero-resistance state supporting a dissipationless current transport through the wrinkle region 112, or between the electrodes 110, 120, respectively.

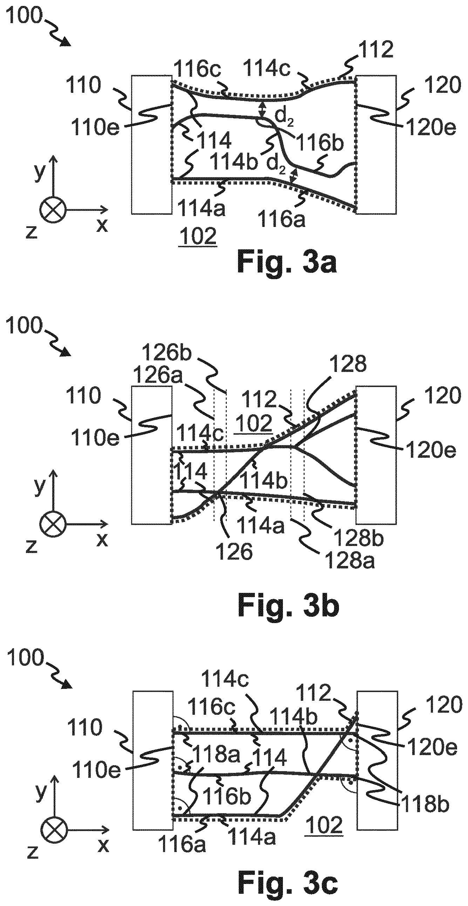

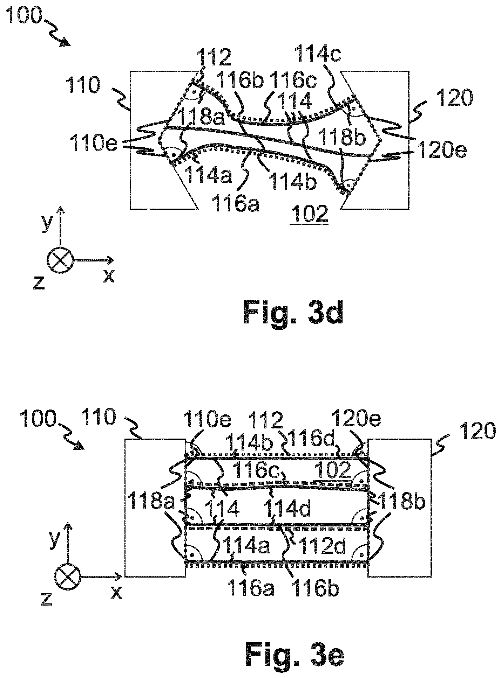

Fig. 3a, Fig. 3b, Fig. 3c, Fig. 3d, and Fig. 3e depict modifications of the superconductor device of Fig. 1. Various modifications are described in the context of these figures. According to different embodiments, one, all or any combination of the described modifications may be implemented.

The embodiment of Fig. 3a is similar to the one of Fig. 1. However, pairs 114a, 114b; 114c, 114d of wrinkles 114 of the embodiment of Fig. 3a comprise parallel sections 116a, 116b; 116b, 116c. These parallel sections beneficially contribute to and enhance the electronic coupling between the wrinkles 114, and thus to the critical temperature of the superconductor device.

The distance d2 between the parallel sections 116a, 116b, 116c may serve as a measure for the distance between the wrinkles 114.

According to the embodiment, the parallel sections 116a, 116b; 116b, 116c coincide with sections of minimum distance between the wrinkles 114a, 114b; 114b, 114c. This arrangement is not necessary, but beneficial for enhancing the coupling between the wrinkles 114a, 114b, 114c.

According to the embodiment, the wrinkles 114 have straight segments 116a, 116b, 116c which (at least in part) coincide with the parallel sections 116a, 116b, 116c. This arrangement is not necessary, but beneficial for enhancing the coupling between the wrinkles 114a, 114b, 114c.

According to the embodiment, each pair of wrinkles 114a, 114b; 114b, 114c comprises respective parallel sections 116a, 116b; 116b, 116c. This arrangement is not necessary, but beneficial for enhancing the coupling between the wrinkles 114a, 114b, 114c. According to alternative embodiments, only a portion of the wrinkles 114 comprises parallel sections.

The embodiment of Fig. 3b is similar to the one of Fig. 1. However, the pair of wrinkles 114a, 114b of Fig. 3b exhibits a crossing (intersection) 126, and the pair of wrinkles 114b, 114c exhibits a branching 128.

The crossing (intersection) 126 and the branching 128 are characterized by the distance between the wrinkles 114a, 114b becoming zero.

At the crossing (intersection) 126, the number of wrinkles 114 in the reference planes 126a, 126b is the same. The reference planes 126a, 126b are perpendicular to the direction x along which the wrinkles 114 extend and arranged at different positions along the direction x, one before and one after the crossing (intersection) 126.

At the branching 128 the numbers of wrinkles 114 in the reference planes 128a, 128b differ. The reference planes 128a, 128b are perpendicular to the direction x along which the wrinkles 114 extend and arranged at different positions along the direction x, one before and one after the branching 128.

Branchings 128 and/or intersections 126 enhance the coupling between the wrinkles 114 further and support the formation of current paths for a dissipationless, superconducting current through the wrinkle region 112.

The embodiment of Fig. 3c is similar to the one of Fig. 1. However, the wrinkles 114a, 114b, 114c of Fig. 3c exhibit a first wrinkle direction 118a in the vicinity of the electrode 110, which is perpendicular to the (edge 110e of the) electrode 110. Moreover, the wrinkles 114b, 114c exhibit a second wrinkle direction 118b in the vicinity of the second electrode 120, which is perpendicular to the (edge 120e of the) second electrode 120. In other words, the electrodes 110, 120 contact the wrinkles 114b, 114c essentially at a 90° angle (perpendicularly). The wrinkle 114a gets contacted electrically by the first electrode 110 at a 90° angle (perpendicularly).

Contacting the wrinkles 114 with the electrodes 110, 120 at a 90° angle has proven beneficial for driving a significant dissipationless (superconducting) current through the wrinkle region 112 using the electrodes 110, 120. In other words, the perpendicular contacting improves the critical current of the superconductor device.

According to the embodiment of Fig. 3c, each wrinkle 114a, 114b, 114c of the plurality 114 of wrinkles has the same first wrinkle direction 118a in the vicinity of the electrode 110, or at its contact to the edge 110e, respectively. However, a beneficial effect may still be achieved when only some (such as a quarter, a third, half) of the wrinkles 114 have the first wrinkle direction 118a. The same holds true for the second wrinkle direction 118b in the vicinity of the second electrode 120. According to the example of Fig. 3c, the wrinkles 114b, 114c have the second wrinkle direction 118b.

The embodiment of Fig. 3d is similar to the ones of Fig. 1, Fig. 3c. However, the electrodes 110, 120 have been formed with a shape ensuring that they 110, 120 are perpendicular to the first wrinkle direction 118a and the second wrinkle direction 118b.

The embodiment of Fig. 3e is similar to the ones of Fig. 1, Fig. 3a, Fig. 3c, and Fig. 3d. The embodiment combines several of the beneficial characteristics described above in the context of those embodiments. The wrinkles 114 of Fig. 3e each have straight, parallel sections 116a, 116b, 116c, 116d (see Fig. 3a). The wrinkles 114 each have a first (second) wrinkle direction 118a (118b) in the vicinity of the first (second) electrode 110 (120), with a 90° angle between the first (second) wrinkle direction 118a (118b) and the first (second) electrode 110 (120).

Each of the wrinkles 114d has a neighboring wrinkle on its first side (towards the positive direction y of Fig. 3e) and an opposite neighboring wrinkle on its opposite side (towards the negative direction y of Fig. 3e), each with a spacing, or distance, respectively, no larger than the critical value for the sufficient electronic coupling. In the context of this disclosure, corresponding wrinkles 114d are referred to as densely packed wrinkles 114d or as a dense wrinkle array 114d. They define, in combination with the electrodes 110, 120 if present, a dense wrinkle region 112d. In contrast to the wrinkle region 112, which may comprise sections without wrinkles 114, the dense wrinkle region 112d is completely filled with a dense wrinkle array 114d.

The dense wrinkle array of Fig. 3e consists of two wrinkles 114d, but it may contain more wrinkles or a single wrinkle, such as the wrinkle 114b of Fig. 1, Fig. 3a, Fig. 3b, Fib. 3c, Fig. 3d.

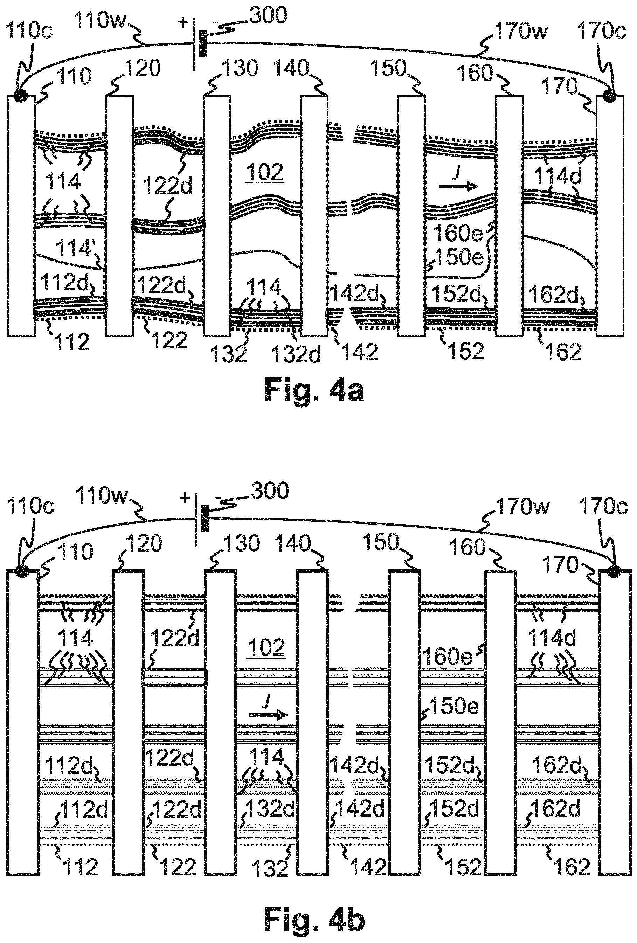

Fig. 4a, Fig. 4b depict modifications of the superconductor device of Fig. 1, Fig. 3a, Fig. 3b, Fig. 3c, Fig. 3c, Fig. 3d, and Fig. 3e. Various modifications are described in the context of these figures. According to different embodiments, one, all or any combination of the described modifications may be implemented.

The embodiments depicted in Fig. 4a, Fig. 4b comprise multiple electrodes 110, 120, 130, 140, 150, 160, 170. A wrinkle region 112, 122, 132, 142, 152, 162 is located between each pair of electrodes 110, 120, 130, 140, 150, 160, 170, or between corresponding edges 150e, 160e, of the electrodes 150, 160 respectively. (Only some of the edges are indicated by reference numerals, but corresponding edges exist for all electrodes 110, 120, 130, 140, 150, 160, 170, typically on two sides of the electrodes 120, 130, 140, 150, 160.)

Each wrinkle region 112, 122, 132, 142, 152, 162 comprises multiple dense wrinkle regions 112d, 122d, 132d, 142d, 152d, 162d. The wrinkle regions 112d, 122d, 132d, 142d, 152d, 162d indicated by the dashed lines are continuous. In other words, they do not comprise any flat section with a width exceeding the critical width.

The superconductor device of Fig. 4a, Fig. 4b further comprises conductive wiring 110w, 170w to a current source 300. The wiring 110w, 170w encounters the electrodes 110, 170 at contacts 110c, 170c, thus connecting the electrodes 110, 170 to the current source 300. The current source 300 provides a current J below the critical current of the superconductor device, which the superconductor device transports between the electrodes 110, 170 and through the wrinkle regions 112, 122, 132, 142, 152, 162. According to the embodiments shown in Fig. 4a and Fig. 4b, wiring 110w, 170w and contacts 110c, 170c to the electrodes 110, 170 are shown, but alternatively, or in addition, electrodes 120, 130, 140, 150, 160 may be provided with wiring to the current source 300 and contacts (not shown).

Corresponding embodiments allow for extending the superconductor device to an enhanced length along one or two dimensions.

The embodiment depicted in figure 4a further comprises an isolated wrinkle 114', i. e. a wrinkle 114' without any neighboring wrinkle within a spacing, or distance, respectively, within the critical value required for the sufficient electronic coupling. In other words, the wrinkle 114' is not part of a pair or a dense wrinkle array. The isolated wrinkle 114' does not contribute to the superconductivity of the superconductor device, or to the superconducting current, respectively. However, the presence of the isolated wrinkle 114' does not interfere with the superconductivity, and the isolated wrinkle 114' may be present in the wrinkle region 112.

In contrast, the dense wrinkle regions 112d, 122d, 132d, 142d, 152d, 162d do not contain any isolated wrinkle. As laid out above in the context of Fig. 3e, each dense wrinkle region 112d, 122d, 132d, 142d, 152d, 162d is entirely filled with a dense wrinkle array 114d, maximizing the critical current density of the superconducting (dissipationless) current in these regions112d, 122d, 132d, 142d, 152d, 162d.

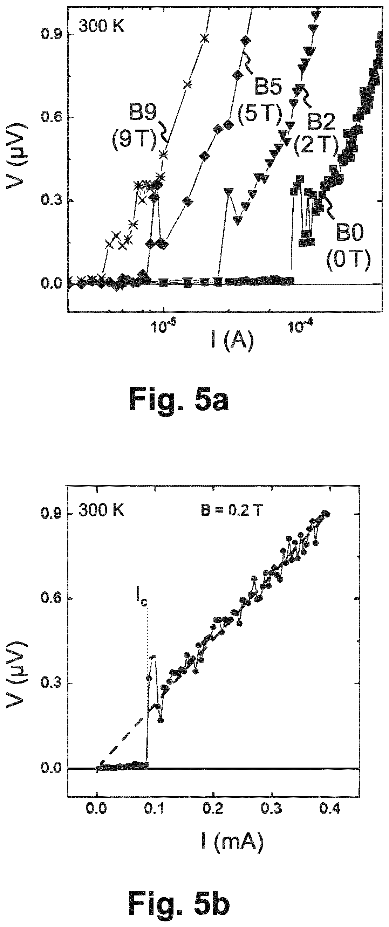

Fig. 5a and Fig. 5b show measured current voltage characteristics for different magnetic fields B and a device layout corresponding to the one of Fig. 4a, Fig. 4b. To establish the device, eleven electrodes 110, 120, 130, 140, 150, 160, 170 of silver-doped, conductive epoxy were deposited on suitable sections (wrinkle regions 112, 122, 132, 142, 152, 162) of a surface of cleaved, highly orientated pyrolytic graphite. The distance between pairs of neighboring electrodes 110, 120; 120, 130; 130, 140; 140, 150; 150, 160; 160, 170 (widths of the wrinkle regions 112, 122, 132, 142, 152, 162) along the direction x was 0.2 mm.

For each measurement, the current I (A), I (mA) driven through the device with the current source 300 is depicted on the lower axis, and the voltage drop V(µA) measured between a pair of the electrodes 110, 120, 130, 140, 150, 160, 170 is depicted on the left axis. Fig. 5a depicts the current voltage characteristics B0, B2, B5, B9 on a semi-logarithmic scale for magnetic fields of 0 T, 2 T, 5 T, and 9 T. Fig. 5b depicts the current voltage characteristics on a linear scale for a magnetic field of 0.2 T. All measurements were performed with the superconductor device at a temperature of 300 K.

All measurements depicted in Fig. 5a and Fig. 5b demonstrate that for a sufficiently small current driven through the device, the voltage drop V(µA) is zero, i. e. below the resolution limit (10 nA) of the measurement devices. Consequently, the resistance R of the superconductor device, defined by the voltage drop V(µA) per current I (A), I (mA) driven through the device, R = V/I, is zero within the resolution limit of the measurement. This is the case for currents I (A), I (mA) between the electrodes 110, 170 below the critical current Ic (e. g. approximately 0.08 mA in Fig. 5b) of the superconductor device. At the critical current Ic, the voltage drop V(µA) shows a sudden increase towards higher currents I (A), I (mA). In other words, the voltage drop V(µA) increases suddenly and significantly, resulting in a much larger resistance R = V/I well detectable with the applied measurement devices. For example, in Fig. 5b, for a current I(mA) of 0.3 mA (> Ic), the voltage drop amounts to approximately 0.6 µA, resulting in a resistance R = 0.6 µA/0.3 mA.

The vanishing (within the resolution limit of the measurement) measured resistance of the superconductor device gives direct evidence of dissipationless (within the resolution limit of the measurement) current transport through the superconductor device, i.e. between the electrodes 110, 120, 130, 140, 150, 160, 170 and/or through the wrinkle regions 112, 122, 132, 142, 152, 162. In general, the dissipated power P relates to the current I (A), I (mA) as P = R I². When the resistance R is zero, the dissipated power is zero, and the current I (A), I (mA) is dissipationless.

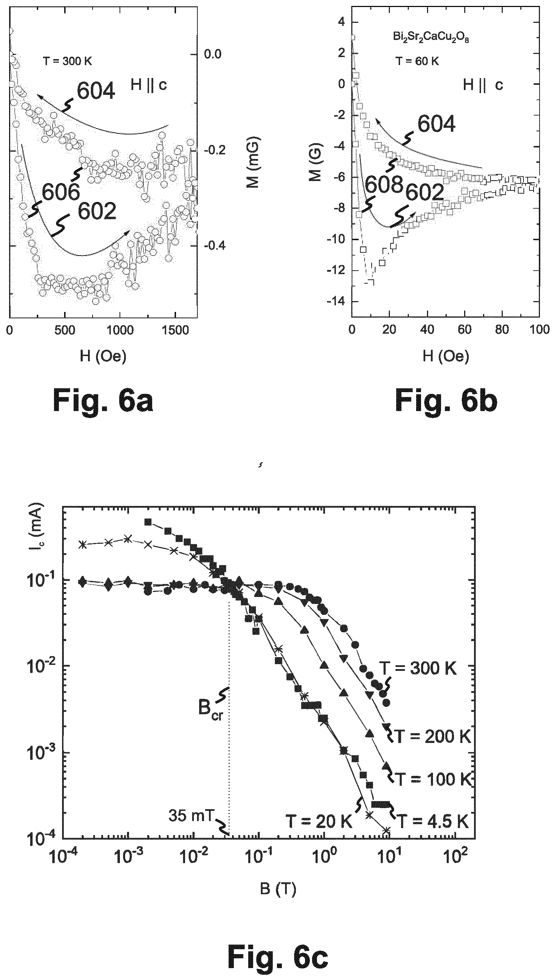

Fig. 6a shows a magnetization curve 606 of a superconductor device according to the description, and Fig. 6b shows a corresponding reference measurement 608 for the conventional superconductor Bi₂Sr₂CaCu₂O₈ at a temperature (60 K) below its critical temperature (90 K). Therefore, the magnetization M (G), M(mG) of the respective material was measured while an external magnetic field H, H (Oe) was applied.

Referring to Fig. 6a, during the measurements, a magnetic field H was applied perpendicular to the topmost atomic layer 102, or along the c-axis c of the flat section of the topmost atomic layers 102 (coinciding with the c-axis of the bulk atomic layers 214, if present), respectively. The superconductor device was kept at a temperature of 300 K for the measurement. The magnetization of the superconductor device was measured as the magnetic field H was ramped up (as indicated by arrow 602 to the right) and as the magnetic field H was decreased (as indicated by arrow 604 to the left). The measured magnetization curve 606 is hysteretic, i. e. its shape differs significantly depending on whether the magnetic field H is ramped up 602 or decreased 604.

The magnetization curve 606 of Fig. 6a is very similar to the reference magnetization curve 608 measured on the conventional, well-established superconductor Bi₂Sr₂CaCu₂O₈ (below its critical temperature) shown in Fig. 6b. The similarity gives direct experimental evidence that the graphite structure 100 performs as a superconductor device not only in the sense that it supports a dissipationless current, but it also expels an external magnetic field (shows a Meissner effect) as the conventional superconductor Bi₂Sr₂CaCu₂O₈ of the reference measurement 608 does.

The inventors decided to perform the reference measurement on Bi₂Sr₂CaCu₂O₈, as it has a layered crystallographic structure, similarly to graphite. For the measurement 608 of Fig. 6b, the magnetic field H was applied perpendicular to the atomic layers of the Bi₂Sr₂CaCu₂O₈, or along its c-axis c, respectively.

Fig. 6c summarizes the critical currents Ic (mA) determined from multiple measurements similar to the ones of Fig. 5a, Fig. 5b for various temperatures T and magnetic fields B.

For each temperature T (e. g., T = 4.5 K, T = 20 K , T = 100 K, ...) the critical current Ic (mA) decreases with increasing magnetic field B (T), as is typically observed for superconductors.

When observing the critical current Ic (mA) at a given magnetic field B (T) (i. e., along a vertical line in Fig. 6c) exceeding a critical field Bcr, the critical current Ic (mA) increases with temperature. According to the example of Fig. 6c, the critical field Bcr amounts to 35 mT. This behavior is unusual and unique to the best of our knowledge, as the critical current Ic (mA) of conventional superconductors decreases with increasing temperature (as observed for the superconductor device of Fig. 6c for magnetic fields B (T) below the critical field Bcr).

The unusual behavior depicted in Fig. 6c makes the superconductor device according to this description particularly attractive for applications in environments where a magnetic field is present. By operating the superconductor device at a sufficiently high temperature, the decrease of the critical current Ic (mA) caused by the magnetic fields B (T) may be compensated. For example, the magnetic field may be unintended and otherwise only be avoided at the expense of a significant technological effort and corresponding costs. Other applications may require a magnetic field for a functionality other than the superconductivity (e. g. for an electric motor).

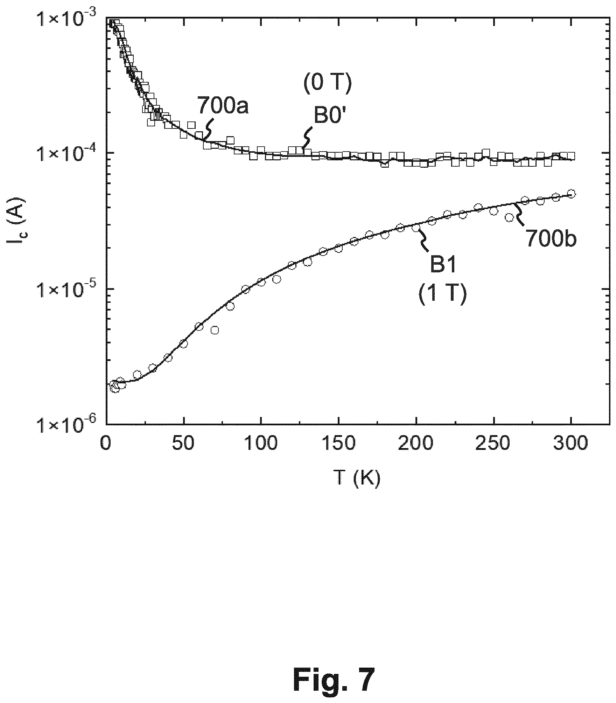

Fig. 7 compares the temperature dependences of the critical current Ic (A) for a magnetic field B0' (0 T) below the critical field Bc and for a magnetic field B1 (1 T) above the critical field Bc. As discussed above, the former decreases with increasing temperature T (K), showing a conventional behavior, whereas the latter increases with temperature T (K) reflecting the unique characteristics of the superconductor device according to the description.

In addition, Fig. 7 depicts the inverse bulk, non-superconducting-state resistance R_{N} of graphite using solid lines 700a, 700b. In other words, the solid lines 700a, 700b depict the function Ic = c / R_{N}, where c is a constant (0.19 µV in the example of Fig. 7). One solid line 700a depicts the function Ic = c / R_{N} using the bulk, non-superconducting-state resistance R_{N} for a magnetic field of 0 T, the other 700b for a magnetic field of 1 T.

On the one hand, the depicted function 700a, 700b, Ic = c / R_{N} agrees well with the measured critical current Ic, B0', B1. On the other hand, the only physical quantity that the depicted function 700a, 700b, Ic = c / R_{N} relates to is the bulk, non-superconducting-state resistance R_{N} of graphite. In combination, these two observations give clear evidence that the superconductivity of the superconductor device, characterized by the critical current Ic, is mediated by the (normal state) bulk graphite. In other words, the (normal state) bulk graphite underlying the topmost layers 102 with the wrinkles beneficially contributes to the superconductivity.

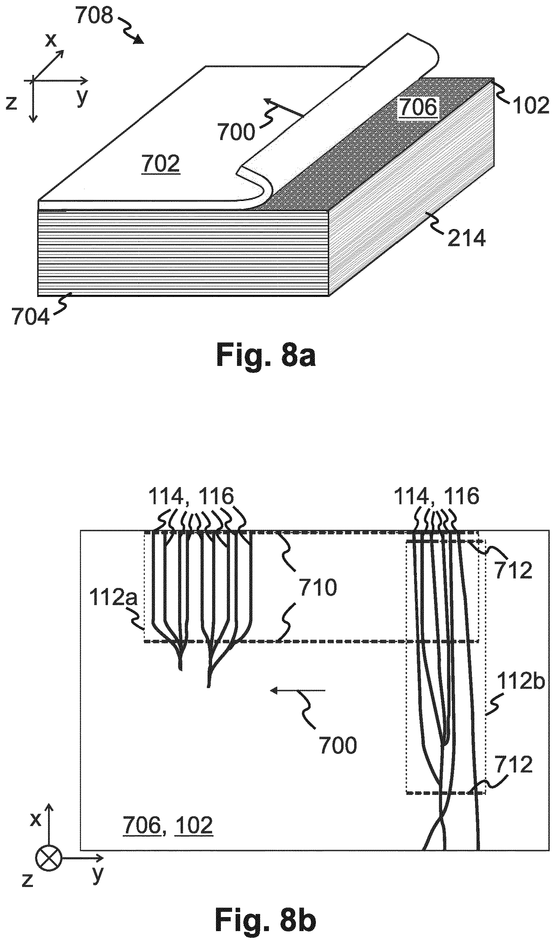

Fig. 8a illustrates a method for generating 708 a surface 706 of a graphite basic material 704 with topmost atomic layers 102, and Fig. 8b shows the resulting surface 706.

Referring to Fig. 8a, a suitable graphite basic material 704 is first provided.

Our experiments indicate that a high degree of parallelism between neighboring atomic layers 214 of the bulk graphite, and/or of the graphite basic material 704, respectively, is beneficial for superconductivity. The parallelism may be characterized by a distribution of the c-axes of the bulk atomic layers 214. The c-axis of each atomic layers refers to an axis perpendicular to the atomic layer. The c-axis should be aligned within 2°, preferably within 0.5° or within 0.2°.

Moreover, our experiments indicate that a graphite basic material 704 with a high resistivity perpendicular to its atomic planes 214 (as compared to the resistivity along its atomic planes 214) is beneficial for superconductivity. Ideally, the resistivity perpendicular to the layers 214 is at least 100,000 times larger than the resistivity parallel to the atomic layers 214.

Highly orientated pyrolytic graphite has proven suitable for the graphite basic material 704.

Further referring to Fig. 8a, an adhesive tape 702 is attached to the upper side of the graphite basic material 704.

Then, the adhesive tape 702 is pulled off the graphite basic material 704 along a direction 700 essentially parallel to the upper side of the graphite basic material 704. The adhesion between the adhesive tape 702 and the uppermost layers of the graphite basic material 704 is stronger than the adhesion between the uppermost layers of the graphite basic material 704 and the atomic layers of the graphite thereunder. Consequently, pulling off the graphite basic material 704 along the direction 700 removes the uppermost layers sticking to the adhesive tape 702 from the graphite basic material 704, and lays open the topmost atomic layers 102 of the surface 706 generated this way. This process is referred to as cleaving 708. Bulk atomic layers 214 remain unaltered by the cleaving 708.

Fig. 8b is a schematic view of the surface 706 generated by the cleaving 708 and defined by the topmost atomic layers 102. Wrinkles 114 perpendicular to the cleaving direction 700 are found on the surface 706 after the cleaving 708. At least in part, the wrinkles 114 exhibit parallel sections 116.

In a next step, wrinkle regions 112a, 112b on the surface 706 are selected to exhibit the properties described above in the context of Fig. 1, Fig. 3a, Fig. 3b, Fig. 3c, Fig. 3d, Fig. 3e. The sections 112a, 112b indicated in Fig. 8b give exemplary, possible choices of such wrinkle regions 112a, 112b.

In a next step, electrodes are deposited onto/over the surface 706 according to the selected wrinkle regions 112a, 112b. In particular, the electrodes are deposited such that their edges coincide with the boundaries 710, 712 of the selected wrinkle regions 112a, 112b perpendicular to the wrinkles 114 (and parallel to the cleaving direction 700).

Therefore, a mask is provided to shadow the wrinkle regions 112a, 112b during the deposition of the electrodes.

Subsequently, electrically conductive material is deposited onto the surface 706 with the mask shadowing the wrinkle regions 112a, 112b to complete the superconductor device. For example, the electrically conductive material may be deposited using molecular beam epitaxy or chemical vapor deposition, applying techniques we known in the context of silicon semiconductor technology, or the conductive material may be deposited from a liquid phase, for example in the form of a silver doped, conductive epoxy.

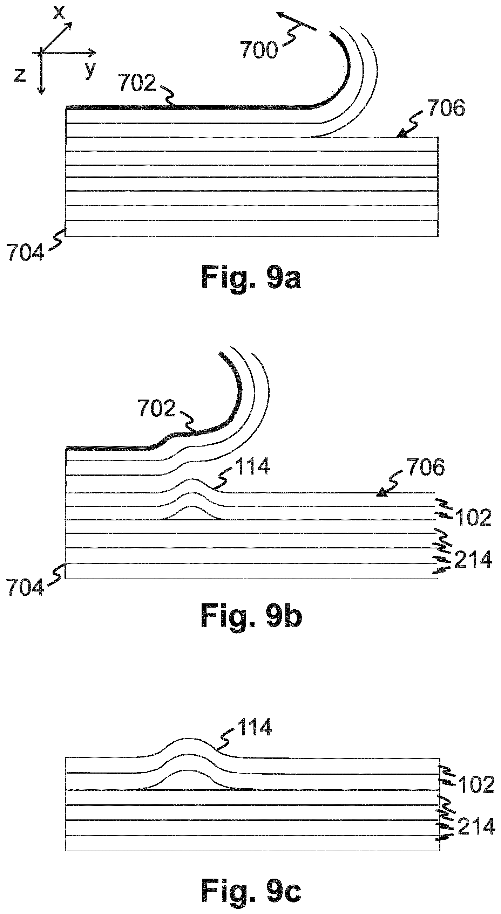

Fig. 9a, Fig. 9b, and Fig. 9c illustrate the generation of wrinkles 114 in the cleaving 708 process.

Fig. 9a schematically depicts the initial stage of the removal of the adhesive tape 702 from the graphite basic material 704 along the direction 700 to generate the surface 706 as described above in the context of Fig. 8a. Pulling the adhesive tape 702 along the direction 700 results in a force along the direction 700 onto the atomic layers of the graphite basic material 704 in the vicinity of the adhesive tape 702 and the surface 706.

Fig. 9b schematically depicts a later stage of the removal of the adhesive tape 702. The force along the direction 700 has resulted in a partial shift of the topmost atomic layers 102 along the direction 700 and led to a wrinkling 114 of the topmost atomic layers 102 near the generated surface 706. The bulk atomic layers 214 under the topmost atomic layers 102 and sufficiently far from the surface 706 (separated from the surface 706 by the topmost atomic layers 102) remain unaltered by the wrinkling 114.

Fig. 9c schematically depicts the final stage of the removal of the adhesive tape 702, i. e. the adhesive tape has fully been removed from the surface 706. The formation of the wrinkle 114 of the topmost atomic layers 102 perpendicular to the direction 700 is completed.

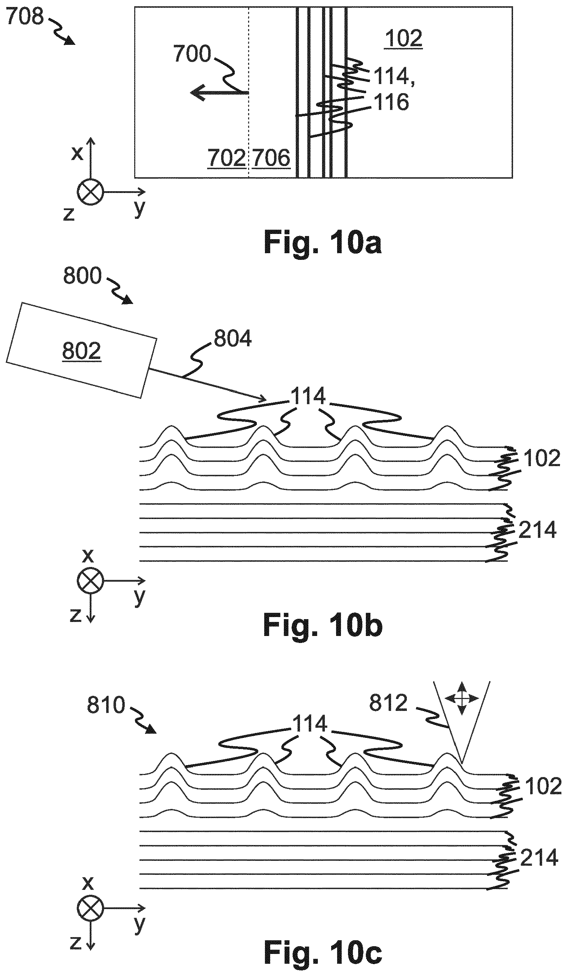

Fig. 10a, Fig. 10b, and Fig. 10c illustrate alternative methods to generate wrinkles 114 and the topmost atomic layers of graphite, preferably with a parallel arrangement of the wrinkles 114.

Fig. 10a shows a top view of the cleaving 708, which is been described above in detail in the context of Fig. 8a, Fig. 9a, Fig. 9b, Fig. 9c. As the wrinkles 114 generated by the cleaving 708 are each essentially perpendicular to the cleaving direction 700, they exhibit long, parallel sections 116. These are formed in the cleaving process 708 essentially parallel to an interface separating the graphite basic material 704 with adhesive tape 702 on top from the surface 706 of the graphite basic material 704 generated in the cleaving 708 process.

Fig. 10b illustrates the formation 800 of wrinkles 114 in the topmost layers 102 using a sound or light source 802 emitting sound or light waves 804. The sound or light waves 804 interact with an (initially flat) graphite surface to generate the wrinkles 114. Details of a corresponding technique using sound waves are given in A.V. Alaferdov, et al., "Ripplocation in graphite nanoplatelets during sonication assisted liquid phase exfoliation," Carbon 129, 826e829 (2018). Details of a corresponding technique using light waves are given in T. Zou et al., "Highspeed femtosecond laser plasmonic lithography and reduction of graphene oxide for anisotropic photoresponse," Light: Science & Applications volume 9, 69 (2020).

Fig. 10c illustrates the formation 810 of wrinkles 114 in the topmost layers 102 using a nano- or microprobe 812. The nano- or microprobe 812 interacts with an (initially flat) graphite surface to generate a force parallel to the surface plane x, y in the topmost atomic layers 102. This force ultimately results in the wrinkling 114 of the topmost atomic layers 102. Details are, for example, given in B. Jayasena et al., "A novel mechanical cleavage method for synthesizing few-layer graphenes," Nanoscale Research Letters 6, 95 (2011) or in X. Lu et al., "Tailoring graphite with the goal of achieving single sheets," Nanotechnology 10, 269 (1999).

The description of the embodiments and the drawings merely serve to illustrate the present disclosure and the advantageous effects associated therewith. The invention is determined by the appended claims.

### LIST OF REFERENCE SIGNS

- 100: graphite structure
- 102, 102a, 102b, 102c: at least one topmost atomic layer
- 110: first electrode
- 110c: contact
- 110e: edge of first electrode
- 110w: wiring of first electrode
- 112, 122, 132, 142, 152, 162: wrinkle region
- 112d, 122d, 132d, 142d, 152d, 162d: dense wrinkle array
- 114: plurality of wrinkles
- 114a, 114b, 114c: wrinkle
- 114d: densely-packed wrinkles, wrinkles with respective neighboring and opposite neighboring wrinkles
- 114': isolated wrinkle
- 116a, 116b, 116c: parallel section
- 118a: first wrinkle direction perpendicular to the first electrode
- 118b: second wrinkle direction perpendicular to the second electrode
- 120: second electrode
- 120e: edge of second electrode
- 126: crossing
- 126a: first reference plane for crossing
- 126b: second reference plane for crossing
- 128: intersection
- 128a: first reference plane for intersection
- 128b: second reference plane for intersection
- 130, 140, 150, 160, 170: electrodes
- 150e, 160e: edge of fifth, sixth electrode
- 170c: contact
- 170w: wiring of electrode
- 300: current supply

- B0, B2, B5, B9: voltage-current characteristics for different magnetic fields

- B0', B1: temperature-dependence of critical current in the absence and presence of magnetic field
- Bcr: critical magnetic field
- 602: ramping up the magnetic field
- 604: decreasing the magnetic field
- 606: magnetization curve of superconductor device
- 608: magnetization curve of reference, conventional superconductor
- 700a, 700b: solid line; function of bulk, non-superconducting-state resistance R_{N}

- 700: cleaving direction
- 702: adhesive tape
- 704: graphite basic material
- 706: surface
- 708: cleaving

- 112a, 112b: region of surface with wrinkles
- 710: edge of region of surface with wrinkles
- 712: edge of region of surface with wrinkles
- 800: generating wrinkles with wave (light, acoustic wave) source
- 802: wave (light, acoustic wave) source
- 804: wave (light, acoustic wave)

- 810: generating wrinkles with scanning probe
- 812: scanning probe

## Claims

1. A superconductor device, wherein the superconductor device is adapted to transport an essentially dissipationless electrical current, the superconductor device comprising:
a graphite structure (100) with at least one topmost atomic layer (102);
a first electrode (110) arranged over the at least one topmost atomic layer (102);
a second electrode (120) arranged over the at least one topmost atomic layer (102) and spaced apart from the first electrode (110); and
a wrinkle region (112) of the at least one topmost atomic layer (102), wherein the wrinkle region (112) is arranged between the first electrode (110) and the second electrode (120) and comprises a plurality (114) of wrinkles comprising a pair of wrinkles (114a, 114b, 114c, 114d);
**characterised in that**
the first electrode (110) and the second electrode (120) both electrically contact both wrinkles (114a, 114b, 114c, 114d) of the pair; and
wherein a distance between the wrinkles (114a, 114b, 114c, 114d) of the pair is at most 0.2 µm.

2. The superconductor device according to claim 1, adapted to support, with the wrinkle region (112) at room temperature, a current between the first electrode (110) and the second electrode (120) through the wrinkle region (112) with a resistivity at least a hundred times lower than the bulk resistivity of graphite.

3. The superconductor device according to claim 1 or 2, further comprising a third electrode (130) arranged over the at least one topmost atomic layer (102) and spaced apart from the first electrode (110) and the second electrode (120);
wherein the at least one topmost atomic layer (102) comprises a second wrinkle region (122) arranged between the second electrode (120) and the third electrode (130);
wherein the second wrinkle region (122) comprises a second plurality of wrinkles comprising a second pair of wrinkles (114a, 114b, 114c, 114d);
wherein the second electrode (120) and the third electrode (130) both electrically contact both wrinkles of the second pair; and
wherein a distance between the wrinkles of the second pair is at most 0.2 µm.

4. The superconductor device according to any of the preceding claims, which further comprises:
a plurality of electrodes (110, 120, 130, 140, 160, 170) comprising the first electrode (110) and the second electrode (120), wherein the plurality of electrodes (110, 120, 130, 140, 160, 170) comprises at least four electrodes (110, 120, 130, 140, 160, 170) spaced apart from each other; and
a plurality of wrinkle regions (112, 112d, 122, 122d, 132, 132d, 142, 142d, 152, 152d) of the at least one topmost atomic layer (102), comprising the wrinkle region (112), wherein the plurality of wrinkle regions (112, 112d, 122, 122d, 132, 132d, 142, 142d, 152, 152d) comprises at least three wrinkle regions (112, 112d, 122, 122d, 132, 132d, 142, 142d, 152, 152d);
wherein the wrinkle regions (112, 112d, 122, 122d, 132, 132d, 142, 142d, 152, 152d) of the plurality of wrinkle regions (112, 112d, 122, 122d, 132, 132d, 142, 142d, 152, 152d)
are associated with respective pairs of electrodes of the plurality of electrodes (110, 120, 130, 140, 160, 170);
are arranged between the electrodes (110, 120, 130, 140, 160, 170) of the respective associated pair; and
comprise respective pluralities (114) of wrinkles (114) comprising a respective pair of wrinkles, wherein the electrodes (110, 120, 130, 140, 160, 170) of the respective associated pair both electrically contact both wrinkles of the respective pair; and
wherein a distance between the wrinkles of the respective pair is at most 0.2 µm; and
wherein any two electrodes (110, 120, 130, 140, 160, 170) of the plurality of electrodes (110, 120, 130, 140, 160, 170) are electrically interconnected via the wrinkle regions (112, 112d, 122, 122d, 132, 132d, 142, 142d, 152, 152d) and/or the electrodes (110, 120, 130, 140, 160, 170).

5. The superconductor device according to any of the preceding claims, wherein the wrinkles (114a, 114b, 114c, 114d) of the pair comprise parallel sections (116a, 116b, 116c).

6. The superconductor device according to any of the preceding claims, wherein a wrinkle (114a, 114b, 114c, 114d) of the pair extends along a first wrinkle direction (118a) at its contact to the first electrode (110), wherein the first electrode (110) comprises a first edge (110e) defining a section of a boundary of the wrinkle region (112), and wherein the first edge (110e) is perpendicular to the first wrinkle direction (118a).

7. The superconductor device according to any of the preceding claims,
wherein the plurality of wrinkles comprises a dense wrinkle array (114d) with at least one wrinkle,
wherein the plurality of wrinkles (114) comprises a neighboring wrinkle (114a, 114b, 114c, 114d) and an opposite neighboring wrinkle (114a, 114b, 114c, 114d) of the at least one wrinkle of the dense wrinkle array (114d) on its opposite sides, wherein a distance between the at least one wrinkle (114d) and the neighboring wrinkle (114a, 114b, 114c, 114d) and a distance between the at least one wrinkle (114d) and the opposite neighboring wrinkle (114a, 114b, 114c, 114d) are both at most 0.2 µm.

8. The superconductor device according to any of the preceding claims, wherein the wrinkles of the pair and/or the at least one wrinkle of the dense wrinkle array (114d) extend through all atomic layers of the at least one topmost atomic layer (102), and wherein the at least one topmost atomic layer (102) comprises at least three topmost atomic layers (102a, 102b, 102c).

9. The superconductor device according to any of the preceding claims, wherein the graphite structure (100) further comprises:
at least two bulk atomic layers (214) below the at least one topmost atomic layer (102), with a bulk layer spacing (216) between neighboring bulk atomic layers (214); and
a wrinkle layer spacing (206) between an atomic layer (102a) of the at least one topmost atomic layer (102) and a neighboring layer (102b) of the at least one topmost atomic layer (102) in a wrinkle (114);
wherein the wrinkle layer spacing (206) exceeds the bulk layer spacing (216), in particular by at least 0.5%, or by at least 1% or by at least 1.5%.

10. The superconductor device according to claim 9, wherein the at least two bulk atomic layers (214) are essentially flat.

11. The superconductor device according to any of the preceding claims, wherein a ratio between a height (202) and a width (204) of the wrinkles of the pair (114a, 114b, 114c, 114d) and/or of the wrinkles (114d) of the dense wrinkle array (114d) is at least 0.5, in particular at least 0.7, in particular at least 0.9, in particular at least 1.1 or at least 1.3.

12. The superconductor device according to any of the preceding claims, wherein the wrinkles (114a, 114b, 114c, 114d) of the pair form a branching (128) and/or an intersection (126).

13. The superconductor device according to any of the preceding claims, wherein the plurality (114) of wrinkles comprises at least two pairs of wrinkles (114a, 114b, 114c, 114d), in particular at least three pairs of wrinkles (114a, 114b, 114c, 114d) or at least four pairs of wrinkles (114a, 114b, 114c, 114d),
wherein the first electrode (110) and the second electrode (120) both electrically contact both respective wrinkles (114a, 114b, 114c, 114d) of the pairs; and
wherein respective distances between the respective wrinkles of the pairs are at most 0.2 µm.

14. A use of a wrinkle region (112) of at least one topmost atomic layer (102) of a graphite structure (100) as a superconductor device with a critical temperature of at least room temperature,
wherein the wrinkle region (112) comprises a plurality of wrinkles (114) with a pair of wrinkles (114a, 114b, 114c, 114d);
wherein a distance between the wrinkles (114a, 114b, 114c, 114d) of the pair is at most 0.2 µm.

15. A method for fabricating a superconductor device, wherein the superconductor device is adapted to transport an essentially dissipationless electrical current, the method comprising:
providing a wrinkle region (112) of at least one topmost atomic layer (102) of a graphite structure (100), wherein the wrinkle region (112) comprises a plurality of wrinkles (114) with a pair of wrinkles (114a, 114b, 114c, 114d), wherein a distance between the wrinkles (114a, 114b, 114c, 114d) of the pair is at most 0.2 µm;
arranging a first electrode (110) over the at least one topmost atomic layer (102) and in electric contact with the wrinkles (114a, 114b, 114c, 114d) of the pair;
arranging a second electrode (120) over the at least one topmost atomic layer (102) and in electric contact with the wrinkles (114a, 114b, 114c, 114d) of the pair, such that the second electrode (120) is spaced apart from the first electrode (110) along the at least one topmost atomic layer (102) and that the wrinkle region (112) is located between the first electrode (110) and the second electrode (120).

## Patentansprüche

1. Supraleitervorrichtung, wobei die Supraleitervorrichtung dazu eingerichtet ist, einen im Wesentlichen dissipationslosen elektrischen Strom zu transportieren, wobei die Supraleitervorrichtung Folgendes aufweist:
eine Graphitstruktur (100) mit mindestens einer obersten Atomlage (102);
eine erste Elektrode (110), die über der mindestens einen obersten Atomlage (102) angeordnet ist;
eine zweite Elektrode (120), die über der mindestens einen obersten Atomlage (102) und von der ersten Elektrode (110) beabstandet angeordnet ist; und
einen Faltenbereich (112) der mindestens einen obersten Atomlage (102), wobei der Faltenbereich (112) zwischen der ersten Elektrode (110) und der zweiten Elektrode (120) angeordnet ist und eine Mehrzahl (114) von Falten, aufweisend ein Paar von Falten (114a, 114b, 114c, 114d), aufweist;
**dadurch gekennzeichnet, dass** die erste Elektrode (110) und die zweite Elektrode (120) beide die beiden Falten (114a, 114b, 114c, 114d) des Paares elektrisch kontaktieren; und
wobei ein Abstand zwischen den Falten (114a, 114b, 114c, 114d) des Paares höchstens 0,2 µm beträgt.

2. Supraleitervorrichtung nach Anspruch 1, die dazu eingerichtet ist, wenn der Faltenbereich (112) bei Raumtemperatur ist, einen Strom zwischen der ersten Elektrode (110) und der zweiten Elektrode (120) durch den Faltenbereich (112) zu tragen, mit einem spezifischen Widerstand, der mindestens hundertmal niedriger ist als der spezifische widerstand im Volumen von Graphit.

3. Supraleitervorrichtung nach Anspruch 1 oder 2, ferner aufweisend eine dritte Elektrode (130), die über der mindestens einen obersten Atomlage (102) und beabstandet von der ersten Elektrode (110) und der zweiten Elektrode (120) angeordnet ist;
wobei die mindestens eine oberste Atomlage (102) einen zweiten Faltenbereich (122) aufweist, der zwischen der zweiten Elektrode (120) und der dritten Elektrode (130) angeordnet ist;
wobei der zweite Faltenbereich (122) eine zweite Mehrzahl von Falten, aufweisend ein zweites Paar von Falten (114a, 114b, 114c, 114d), aufweist;
wobei die zweite Elektrode (120) und die dritte Elektrode (130) beide die beiden Falten des zweiten Paares elektrisch kontaktieren; und
wobei ein Abstand zwischen den Falten des zweiten Paares höchstens 0,2 µm beträgt.

4. Supraleitervorrichtung nach einem der vorhergehenden Ansprüche, ferner aufweisend:
eine Mehrzahl von Elektroden (110, 120, 130, 140, 160, 170), aufweisend die erste Elektrode (110) und die zweite Elektrode (120), wobei die Mehrzahl von Elektroden (110, 120, 130, 140, 160, 170) mindestens vier Elektroden (110, 120, 130, 140, 160, 170) aufweist, die voneinander beabstandet sind; und
eine Mehrzahl von Faltenbereichen (112, 112d, 122, 122d, 132, 132d, 142, 142d, 152, 152d) der mindestens einen obersten Atomlage (102), aufweisend den Faltenbereich (112), wobei die Mehrzahl von Faltenbereichen (112, 112d, 122, 122d, 132, 132d, 142, 142d, 152, 152d) mindestens drei Faltenbereiche (112, 112d, 122, 122d, 132, 132d, 142, 142d, 152, 152d) aufweist;
wobei die Faltenbereiche (112, 112d, 122, 122d, 132, 132d, 142, 142d, 152, 152d) der Mehrzahl von Faltenbereichen (112, 112d, 122, 122d, 132, 132d, 142, 142d, 152, 152d)
jeweiligen Paaren von Elektroden der Mehrzahl von Elektroden (110, 120, 130, 140, 160, 170) zugeordnet sind;
zwischen den Elektroden (110, 120, 130, 140, 160, 170) des jeweiligen zugeordneten Paars angeordnet sind; und
jeweilige Mehrzahlen (114) von Falten (114), aufweisend ein jeweiliges Paar von Falten, aufweisen, wobei die Elektroden (110, 120, 130, 140, 160, 170) des jeweiligen zugeordneten Paars beide die beiden Falten des jeweiligen Paares elektrisch kontaktieren; und wobei ein Abstand zwischen den Falten des jeweiligen Paares höchstens 0,2 µm beträgt; und
wobei beliebige zwei Elektroden (110, 120, 130, 140, 160, 170) der Mehrzahl von Elektroden (110, 120, 130, 140, 160, 170) über die Faltenbereiche (112, 112d, 122, 122d, 132, 132d, 142, 142d, 152, 152d) und/oder die Elektroden (110, 120, 130, 140, 160, 170) elektrisch miteinander verbunden sind.

5. Supraleitervorrichtung nach einem der vorhergehenden Ansprüche, wobei die Falten (114a, 114b, 114c, 114d) des Paares parallele Abschnitte (116a, 116b, 116c) aufweisen.

6. Supraleitervorrichtung nach einem der vorhergehenden Ansprüche, wobei sich eine Falte (114a, 114b, 114c, 114d) des Paares entlang einer ersten Faltenrichtung (118a) an ihrem Kontakt mit der ersten Elektrode (110) erstreckt, wobei die erste Elektrode (110) eine erste Kante (110e) aufweist, die einen Abschnitt einer Begrenzung des Faltenbereichs (112) definiert, und wobei die erste Kante (110e) senkrecht zu der ersten Faltenrichtung (118a) ist.

7. Supraleitervorrichtung nach einem der vorhergehenden Ansprüche,
wobei die Mehrzahl von Falten ein dichtes Faltenfeld (114d) mit mindestens einer Falte aufweist,
wobei die Mehrzahl von Falten (114) eine benachbarte Falte (114a, 114b, 114c, 114d) und eine entgegengesetzte benachbarte Falte (114a, 114b, 114c, 114d) der mindestens einen Falte des dichten Faltenfelds (114d) auf entgegengesetzten Seiten aufweist, wobei ein Abstand zwischen der mindestens einen Falte (114d) und der benachbarten Falte (114a, 114b, 114c, 114d) und ein Abstand zwischen der mindestens einen Falte (114d) und der entgegengesetzten benachbarten Falte (114a, 114b, 114c, 114d) beide höchstens 0,2 µm betragen.

8. Supraleitervorrichtung nach einem der vorhergehenden Ansprüche, wobei sich die Falten des Paares und/oder die mindestens eine Falte des dichten Faltenfelds (114d) durch alle Atomlagen der mindestens einen obersten Atomlage (102) erstrecken, und wobei die mindestens eine oberste Atomlage (102) mindestens drei oberste Atomlagen (102a, 102b, 102c) aufweist.

9. Supraleitervorrichtung nach einem der vorhergehenden Ansprüche, wobei die Graphitstruktur (100) ferner Folgendes aufweist:
mindestens zwei Volumen-Atomlagen (214) unter der mindestens einen obersten Atomlage (102) mit einem Volumen-Atomlagenabstand (216) zwischen benachbarten Volumen-Atomlagen (214); und
einen Faltenschicht-Abstand (206) zwischen einer Atomlage (102a) der mindestens einen obersten Atomlage (102) und einer benachbarten Lage (102b) der mindestens einen obersten Atomlage (102) in einer Falte (114);
wobei der Faltenschicht-Abstand (206) den Volumen-Atomlagenabstand (216) überschreitet, insbesondere um mindestens 0,5 % oder um mindestens 1 % oder um mindestens 1,5 %.

10. Supraleitervorrichtung nach Anspruch 9, wobei die mindestens zwei Volumen-Atomlagen (214) im Wesentlichen flach sind.

11. Supraleitervorrichtung nach einem der vorhergehenden Ansprüche, wobei ein Verhältnis zwischen einer Höhe (202) und einer Breite (204) der Falten des Paares (114a, 114b, 114c, 114d) und/oder der Falten (114d) des dichten Faltenfelds (114d) mindestens 0,5, insbesondere mindestens 0,7, insbesondere mindestens 0,9, insbesondere mindestens 1,1 oder mindestens 1,3 beträgt.

12. Supraleitervorrichtung nach einem der vorhergehenden Ansprüche, wobei die Falten (114a, 114b, 114c, 114d) des Paares eine Verzweigung (128) und/oder eine Kreuzung (126) bilden.

13. Supraleitervorrichtung nach einem der vorhergehenden Ansprüche, wobei die Mehrzahl (114) von Falten mindestens zwei Paare von Falten (114a, 114b, 114c, 114d), insbesondere mindestens drei Paare von Falten (114a, 114b, 114c, 114d) oder mindestens vier Paare von Falten (114a, 114b, 114c, 114d) aufweist,
wobei die erste Elektrode (110) und die zweite Elektrode (120) beide die beiden jeweiligen Falten (114a, 114b, 114c, 114d) der Paare elektrisch kontaktieren; und
wobei jeweilige Abstände zwischen den jeweiligen Falten der Paare höchstens 0,2 µm betragen.

14. Verwendung eines Faltenbereichs (112) mindestens einer obersten Atomlage (102) einer Graphitstruktur (100) als eine Supraleitervorrichtung mit einer kritischen Temperatur von mindestens Raumtemperatur,
wobei der Faltenbereich (112) eine Mehrzahl von Falten (114) mit einem Paar von Falten (114a, 114b, 114c, 114d) aufweist;
wobei ein Abstand zwischen den Falten (114a, 114b, 114c, 114d) des Paares höchstens 0,2 µm beträgt.

15. Verfahren zum Herstellen einer Supraleitervorrichtung, wobei die Supraleitervorrichtung dazu eingerichtet ist, einen im Wesentlichen dissipationslosen elektrischen Strom zu transportieren, wobei das Verfahren Folgendes aufweist:
Bereitstellen eines Faltenbereichs (112) mindestens einer obersten Atomlage (102) einer Graphitstruktur (100), wobei der Faltenbereich (112) eine Mehrzahl von Falten (114) mit einem Paar von Falten (114a, 114b, 114c, 114d) aufweist, wobei ein Abstand zwischen den Falten (114a, 114b, 114c, 114d) des Paares höchstens 0,2 µm beträgt;
Anordnen einer ersten Elektrode (110) über der mindestens einen obersten Atomlage (102) und in elektrischem Kontakt mit den Falten (114a, 114b, 114c, 114d) des Paares;
Anordnen einer zweiten Elektrode (120) über der mindestens einen obersten Atomlage (102) und in elektrischem Kontakt mit den Falten (114a, 114b, 114c, 114d) des Paares, so dass die zweite Elektrode (120) von der ersten Elektrode (110) entlang der mindestens einen obersten Atomlage (102) beabstandet ist und dass der Faltenbereich (112) zwischen der ersten Elektrode (110) und der zweiten Elektrode (120) angeordnet ist.

## Revendications

1. Dispositif supraconducteur, dans lequel le dispositif supraconducteur est adapté pour transporter un courant électrique essentiellement sans dissipation, le dispositif supraconducteur comprenant :
une structure en graphite (100) avec au moins une couche atomique supérieure (102) ;
une première électrode (110) prévue par-dessus l'au moins une couche atomique supérieure (102) ;
une deuxième électrode (120) prévue par-dessus l'au moins une couche atomique supérieure (102) et espacée de la première électrode (110) ; et
une zone de plis (112) de l'au moins une couche atomique supérieure (102), dans lequel la zone de plis (112) est prévue entre la première électrode (110) et la deuxième électrode (120) et comprend une pluralité (114) de plis comprenant une paire de plis (114a, 114b, 114c, 114d) ;
dans lequel la première électrode (110) et la deuxième électrode (120) sont toutes les deux en contact électrique avec les deux plis (114a, 114b, 114c, 114d) de la paire ; et
dans lequel une distance entre les plis (114a, 114b, 114c, 114d) de la paire est tout au plus de 0,2 µm.

2. Dispositif supraconducteur selon la revendication 1, adapté pour supporter, avec la zone de plis (112) à température ambiante, un courant entre la première électrode (110) et la deuxième électrode (120) par le biais de la zone de plis (112) avec une résistivité au moins cent fois inférieure à la résistivité volumique du graphite.

3. Dispositif supraconducteur selon la revendication 1 ou 2, comprenant en outre une troisième électrode (130) prévue par-dessus l'au moins une couche atomique supérieure (102) et espacée de la première électrode (110) et de la deuxième électrode (120) ;
dans lequel l'au moins une couche atomique supérieure (102) comprend une deuxième zone de plis (122) prévue entre la deuxième électrode (120) et la troisième électrode (130) ;
dans lequel la deuxième zone de plis (122) comprend une deuxième pluralité de plis comprenant une deuxième paire de plis (114a, 114b, 114c, 114d) ;
dans lequel la deuxième électrode (120) et la troisième électrode (130) sont toutes les deux en contact électrique avec les plis de la deuxième paire ; et
dans lequel une distance entre les plis de deuxième la paire est tout au plus de 0,2 µm.

4. Dispositif supraconducteur selon l'une quelconque des revendications précédentes, qui comprend en outre :
une pluralité d'électrodes (110, 120, 130, 140, 160, 170) comprenant la première électrode (110) et la deuxième électrode (120), dans lequel la pluralité d'électrodes (110, 120, 130, 140, 160, 170) comprend au moins quatre électrodes (110, 120, 130, 140, 160, 170) espacées les unes des autres ; et
une pluralité de zones de plis (112, 112d, 122, 122d, 132, 132d, 142, 142d, 152, 152d) de l'au moins une couche atomique supérieure (102), comprenant la zone de plis (112), dans lequel la pluralité de zones de plis (112, 112d, 122, 122d, 132, 132d, 142, 142d, 152, 152d) comprend au moins trois zones de plis (112, 112d, 122, 122d, 132, 132d, 142, 142d, 152, 152d) ;
dans lequel les zones de plis (112, 112d, 122, 122d, 132, 132d, 142, 142d, 152, 152d) de la pluralité de zones de plis (112, 112d, 122, 122d, 132, 132d, 142, 142d, 152, 152d)
sont associées aux paires respectives d'électrodes de la pluralité d'électrodes (110, 120, 130, 140, 160, 170) ;
sont prévues entre les électrodes (110, 120, 130, 140, 160, 170) de la paire associée respective ; et
comprennent des pluralités respectives (114) de plis (114) comprenant une paire respective de plis, dans lequel les électrodes (110, 120, 130, 140, 160, 170) de la paire associée respective sont toutes les deux en contact électrique avec les deux plis de la paire respective ; et dans lequel une distance entre les plis de la paire respective est tout au plus de 0,2 µm ; et
dans lequel deux électrodes (110, 120, 130, 140, 160, 170) de la pluralité d'électrodes (110, 120, 130, 140, 160, 170) sont interconnectées électriquement via les zones de plis (112, 112d, 122, 122d, 132, 132d, 142, 142d, 152, 152d) et/ou les électrodes (110, 120, 130, 140, 160, 170).

5. Dispositif supraconducteur selon l'une quelconque des revendications précédentes, dans lequel les plis (114a, 114b, 114c, 114d) de la paire comprennent des sections parallèles (116a, 116b, 116c).

6. Dispositif supraconducteur selon l'une quelconque des revendications précédentes, dans lequel un pli (114a, 114b, 114c, 114d) de la paire s'étend le long d'une première direction de pli (118a) au niveau de son contact avec la première électrode (110), dans lequel la première électrode (110) comprend un premier bord (110e) qui définit une section d'une limite de la zone de plis (112), et dans lequel le premier bord (110e) est perpendiculaire à la première direction de pli (118a).

7. Dispositif supraconducteur selon l'une quelconque des revendications précédentes,
dans lequel la pluralité de plis comprend un ensemble de plis denses (114d) avec au moins un pli,
dans lequel la pluralité de plis (114) comprend un pli voisin (114a, 114b, 114d, 114d) et un pli voisin opposé (114a, 114b, 114c, 114d) de l'au moins un pli de l'ensemble de plis denses (114d) sur ses côtés opposés, dans lequel une distance entre l'au moins un pli (114d) et le pli voisin (114a, 114b, 114c, 114d) et une distance entre l'au moins un pli (114d) et le pli voisin opposé (114a, 114b, 114c, 114d) sont toutes les deux tout au plus de 0,2 µm.

8. Dispositif supraconducteur selon l'une quelconque des revendications précédentes, dans lequel les plis de la paire et/ou l'au moins un pli de l'ensemble de plis denses (114d) s'étendent à travers toutes les couches atomiques de l'au moins une couche atomique supérieure (102), et dans lequel l'au moins une couche atomique supérieure (102) comprend au moins trois couches atomiques supérieures (102a, 102b, 102c).

9. Dispositif supraconducteur selon l'une quelconque des revendications précédentes, dans lequel la structure en graphite (100) comprend en outre :
au moins deux couches atomiques volumiques (214) sous l'au moins une couche atomique supérieure (102), avec un espacement de couches volumiques (216) entre les couches atomiques volumiques voisines (214) ; et
un espacement de couches de plis (206) entre une couche atomique (102a) de l'au moins une couche atomique supérieure (102) et une couche voisine (102b) de l'au moins une couche atomique supérieure (102) dans un pli (114) ;
dans lequel l'espacement de couches de plis (206) dépasse l'espacement de couches volumiques (216), en particulier d'au moins 0,5 %, ou d'au moins 1 % ou d'au moins 1,5 %.

10. Dispositif supraconducteur selon la revendication 9, dans lequel les au moins deux couches atomiques volumiques (214) sont essentiellement plates.

11. Dispositif supraconducteur selon l'une quelconque des revendications précédentes, dans lequel un rapport entre une hauteur (202) et une largeur (204) des plis de la paire (114a, 114b, 114c, 114d) et/ou des plis (114d) de l'ensemble de plis denses (114d) est d'au moins 0,5, en particulier d'au moins 0,7, en particulier d'au moins 0,9, en particulier d'au moins 1,1 ou d'au moins 1,3.

12. Dispositif supraconducteur selon l'une quelconque des revendications précédentes, dans lequel les plis (114a, 114b, 114c, 114d) de la paire forment un embranchement (128) et/ou une intersection (126).

13. Dispositif supraconducteur selon l'une quelconque des revendications précédentes, dans lequel la pluralité (114) de plis comprend au moins deux paires de plis (114a, 114b, 114c, 114d), en particulier au moins trois paires de plis (114a, 114b, 114c, 114d) ou au moins quatre paires de plis (114a, 114b, 114c, 114d),
dans lequel la première électrode (110) et la deuxième électrode (120) sont toutes les deux en contact électrique avec les deux plis respectifs (114a, 114b, 114c, 114d) des paires ; et
dans lequel les distances respectives entre les plis respectifs des paires sont tout au plus de 0,2 µm.

14. Utilisation d'une zone de plis (112) d'au moins une couche atomique supérieure (102) d'une structure en graphite (100) comme un dispositif supraconducteur avec une température critique d'au moins la température ambiante,
dans laquelle la zone de plis (112) comprend une pluralité de plis (114) avec une paire de plis (114a, 114b, 114c, 114d) ;
dans laquelle une distance entre les plis (114a, 114b, 114c, 114d) de la paire est tout au plus de 0,2 µm.

15. Procédé de fabrication d'un dispositif supraconducteur, dans lequel le dispositif supraconducteur est adapté pour transporter un courant électrique essentiellement sans dissipation, le procédé comprenant :
le fait de prévoir une zone de plis (112) d'au moins une couche atomique supérieure (102) d'une structure en graphite (100), dans lequel la zone de plis (112) comprend une pluralité de plis (114) avec une paire de plis (114a, 114b, 114c, 114d), dans lequel une distance entre les plis (114a, 114b, 114c, 114d) de la paire est tout au plus de 0,2 µm ;
le placement d'une première électrode (110) par-dessus l'au moins une couche atomique supérieure (102) et en contact électrique avec les plis (114a, 114b, 114c, 114d) de la paire ;
le placement d'une deuxième électrode (120) par-dessus l'au moins une couche atomique supérieure (102) et en contact électrique avec les plis (114a, 114b, 114c, 114d) de la paire, de sorte que la deuxième électrode (120) soit espacée de la première électrode (110) le long de l'au moins une couche atomique supérieure (102) et que la zone de plis (112) se trouve entre la première électrode (110) et la deuxième électrode (120).
